# EUROPÄISCHE PATENTSCHRIFT

(11) **EP 2 685 306 B1**
(45) Veröffentlichungstag und Bekanntmachung des Hinweises auf die Patenterteilung: **15.05.2024**
(21) Anmeldenummer: 13003401.0
(22) Anmeldetag: 05.07.2013
(51) Int. Cl.: G02C 7/02, G02B 1/11

(54) **VERFAHREN ZUR HERSTELLUNG einer BRILLENLINSE**
method for manufacturing a spectacle lens
Procédé de fabrication d'un verre de lunette

(30) Priorität: 26.09.2012 US 201261705842 P; 11.07.2012 DE 102012013683
(43) Veröffentlichungstag der Anmeldung: 15.01.2014
(73) Patentinhaber: Carl Zeiss Vision International GmbH, 73430 Aalen (DE)
(72) Erfinder: Macionczyk, Frank, 73447 Oberkochen (DE); Holtmann, Simon, Seaford Meadow, 5169 SA (AU)
(74) Vertreter: Carl Zeiss AG - Patentabteilung

(56) Entgegenhaltungen:
- EP-A1- 0 677 764
- EP-A2- 0 103 217
- WO-A2-02/065171
- WO-A2-03/049952
- FR-A1- 2 451 900
- JP-A- 2007 041 569
- US-A- 4 313 648
- US-A1- 2010 102 025

## Beschreibung

Die Erfindung betrifft ein Verfahren zur Herstellung einer Brillenlinse nach dem Oberbegriff des Patentanspruchs

Verfahren zur Erzeugung von sichtbaren Strukturen auf oder in transparenten Gegenständen mit Hilfe mehrerer nebeneinander angeordneter Gravurpunkte sind aus dem Stand der Technik in einer Vielzahl von Abwandlungen bekannt.

Die DE 4141869 B4 beschreibt die Behandlung von Oberflächen von Glaskörpern mit einem Laser. Die Beschreibungseinleitung der WO 03/049952 A2 verweist darauf, dass es bekannt sei, auf der Oberfläche von transparenten Gegenständen Markenzeichen oder dgl. anzubringen. Das Anbringen dieser Markenzeichen könne dabei mit einem Laser erfolgen, der eine Vertiefung in Art einer Gravur erzeugt. Weiterhin sei es bekannt, in den Markenzeichen oder dgl. weitere insbesondere maschinell lesbare Informationen "versteckt" unterzubringen. Derartige, auf der Oberfläche eingravierte Zeichen mit "versteckten" Informationen hätten jedoch den Nachteil, dass sie insbesondere dann, wenn auf die Oberfläche weitere Schichten, wie beispielsweise Hartschichten oder Entspiegelungsschichten mit einem nahezu gleichen Brechungsindex - wie bei Brillengläsern üblich - aufgebracht würden, nur unzureichend maschinell erfassbar seien, da die Vertiefungen durch die Auffüllung mit dem Schichtmaterial praktisch nicht mehr erkannt werden könnten.

Die WO 03/049952 A2 empfiehlt daher ähnlich wie die DE 4407547 A1 das Einbringen eines Markenzeichens in ein Brillenglas. Das Zeichen soll sich nach der WO 03/049952 A2 in einem Bereich von ca. 0,1 mm bis 1 mm unterhalb der Oberfläche des Brillenglases befinden. Der Veröffentlichungsschrift entnimmt man weiter, dass das Markenzeichen zusätzliche Informationen zur Identifikation des Brillenglases in Form einer Vielzahl kleinster Informationselemente enthalte, die zusammen mindestens Teile des Markenzeichens bildeten.

Diese Informationselemente könnten auch räumlich ausgedehnte Lasergravurpunkte umfassen. Es wird angegeben, dass einzelne Punkte mit einem Punktdurchmesser von 5 bis 10 Mikrometer problemlos erzeugt werden könnten. Ferner ist in diesem Dokument angegeben, dass die Informationselemente zur Codierung von Informationen unterschiedliche Farbstufen aufweisen könnten. Diese Farbcodierungen sollten vor dem Auge des Betrachters kaschiert werden. Es ist nicht angegeben, wie die unterschiedlichen Farben der Farbcodierung erzeugt werden können.

Ein Verfahren zum Einbringen wenigstens einer Innengravur in einen flachen Körper und eine Vorrichtung zum Durchführen des Verfahrens sind auch in der EP 1138516 A2 beschrieben.

Aus der DE 102007004524 A1 ist ein Verfahren zur Erzeugung eines von außen sichtbaren und bei Bestrahlung mit sichtbarem Licht unter verschiedenen Betrachtungswinkeln unterschiedlich farbig schillernd erscheinenden flächigen Zeichens auf der Oberfläche oder im Inneren eines transparenten Gegenstands, wie z. B. eines Brillenglases, bekannt. Die farbig schillernde Erscheinung des Zeichens wird durch eine geeignete Wahl der Abstände einer Vielzahl von benachbarten Gravurpunkten erreicht und ist auf Beugungserscheinungen an dem durch die regelmäßige Anordnung der Gravurpunkte gebildeten Beugungsgitter zurückzuführen. Die Gravurpunkte können mit Hilfe eines Lasers erzeugt worden sein. Eine bevorzugte Variante besteht darin, die Gravurpunkte in eine auf der Oberfläche befindliche Beschichtung einzubringen. Hierbei kann es sich zum Beispiel um eine Antireflexionsbeschichtung oder eine Antihaftbeschichtung mit Dicken von unter einem Mikrometer handeln.

Der Farbeindruck und der Helligkeitseindruck des flächigen Zeichens ist bei dem in der DE 102007004524 A1 beschriebenen Verfahren nicht in vorbestimmter Weise festgelegt.

Die EP 0 677 764 A1 offenbart eine optische Filteranordnung, die insbesondere bei Brillengläsern eingesetzt werden kann. Die optische Filteranordnung umfasst ein transparentes Substrat und eine optische Beschichtung mit wenigstens zwei übereinander angeordneten optischen Dünnschichten. Seite 7, Zeilen 38 bis 40 der Druckschrift entnimmt man den Hinweis auf eine Filteranordnung, mit der farbige Logos auf farbigen Hintergründen dargestellt werden können. Der Tabelle 4 in der Druckschrift entnimmt man den Aufbau der optischen Beschichtung, um drei unterschiedliche Farben darzustellen. Die Farbe Bronze kann mit einer Chromschicht mit einer Dicke von 21,3 nm und einer darüber angeordneten SiO-Schicht von 42 nm auf dem Substrat erzeugt werden. Die Farbe Purpur erfordert eine Cr-Schichtdicke von 21,3 nm und eine SiO-Schichtdicke von 42 nm auf dem Substrat. Blau ist die Farbe bei einem Schichtaufbau mit einer 20,9 nm dicken Chromschicht und einer 72 nm dicken SiO-Schicht. Eine neutrale Farbe erhält man mit einer 14,9 nm dicken Chromschicht.

Der US 2010/0102025 A1 entnimmt man ein Verfahren und eine Vorrichtung, um eine Markierung an einer ophthalmischen Linse anzubringen. Die Druckschrift lehrt, wenigstens einen Teil der äußersten Schicht einer eine Mehrzahl an Einzelschichten aufweisenden Beschichtung zu entfernen.

Die WO 02/065171 A2 offenbart eine Filteranordnung mit zwei optischen Dünnschichtstapeln. Jeder der Dünnschichtstapel umfasst zwei teilweise absorbierende Schichten und eine dazwischen angeordnete dielektrische Dünnschicht.

Auch die FR 2 451 900 A1 offenbart insbesondere ein Brillenglas mit einer Beschichtung. Die Beschichtung weist zwei unterschiedliche Zonen auf. In den beiden Zonen sind die Schichtstapel der Beschichtung unterschiedlich. Aufgrund von Interferenz wird ein farbiger Eindruck erzeugt.

Die EP 0 103 217 A2 offenbart ein Kennzeichen oder eine Markierung in Form eines ausgesparten Bereichs in einer reflexvermindernden Schicht.

Die JP 2007 041569 A beschreibt eine Markierung durch Entfernen einer Hartbeschichtung und eines Teils eines Linsensubstratmaterials. Eine Antireflexbeschichtung überdeckt den hartbeschichteten Bereich und den markierten Bereich.

Die Aufgabe der Erfindung besteht darin, eine Brillenlinse bereitzustellen, welche ein farbiges Zeichen, eine farbige Grafik oder dergleichen mit einem vorbestimmbaren Farb- und Helligkeitseindruck aufweist. Weiterhin besteht die Aufgabe der Erfindung darin, ein entsprechendes Verfahren zur Herstellung einer derartigen Brillenlinse bereitzustellen. Schließlich besteht die Aufgabe der Erfindung auch darin, eine Vorrichtung zur Herstellung einer vorstehend charakterisierten Brillenlinse bereitzustellen.

Diese erstgenannte Aufgabe wird bei einem Verfahren mit den Merkmalen des Patentanspruchs 1 gelöst.

Vorteilhafte Ausführungen und Weiterbildungen der Erfindung sind in den abhängigen Ansprüchen beschrieben.

Die erfindungsgemäße Brillenlinse für einen Brillenträger umfasst einen eine lichtbrechende Wirkung aufweisenden Linsenkörper mit einer Oberfläche und ein auf dieser Oberfläche angeordnetes Interferenzschichtsystem.

Der Linsenkörper besteht üblicherweise aus einem organischen oder einem mineralischen Material. Typische organische Materialien sind Diethylenglycolbisallylcarbonat bzw. Allyl-Diglykol-Carbonat (Abkürzung: ADC), welches von der Firma PPG Industries unter der Marke "Columbia Resin 39" oder "CR 39" vertrieben wird, höherbrechende duroplastische Polymerwerkstoffe wie z.B. die unter den Handelsbezeichnungen MR-7, MR-8, MR-10 der Firma Mitsui Chemicals vertriebenen Polythiol-Urethane (die Abkürzung "MR" steht dabei für Mitsui Resin), Polymethylmethacrylat (Abkürzung: PMMA) oder Polycarbonat. Bei mineralischen Materialien wird zwischen Krongläsern (Abbe-Zahl >55) und Flintgläsern (Abbe-Zahl <50) unterschieden.

Unter einem Interferenzschichtsystem versteht man eine oder mehrere übereinander angeordnete Dünnschichten optisch transparenter Materialien. Weißes Licht, welches an dünnen Schichten optisch transparenter Materialien reflektiert wird, erscheint häufig farbig. Diese Interferenzfarben entstehen durch Überlagerung der Strahlen, die an der Oberfläche der Schicht und an der unteren Grenzfläche reflektiert werden.

Die Oberfläche des die lichtbrechende Wirkung aufweisenden Linsenkörpers einer Brillenlinse kann nach dem Stand der Technik aus verschiedenen Gründen eine oder mehrere übereinander angeordnete optisch transparente Dünnschichten aufweisen, die als Interferenzschichtsystem nach obiger Definition wirken. Die optische Beschichtung einer Brillenlinse kann eine Entspiegelungs- bzw. Antireflexionsbeschichtung, eine Verspiegelungsbeschichtung, eine Hartbeschichtung, eine schmutzabweisende Beschichtung, eine das Beschlagen verhindernde oder reduzierende Beschichtung und eine antistatisch wirkende Beschichtung aufweisen. Jede dieser Beschichtungen kann durch eine oder mehrere einzelne optisch transparente Schichten gebildet sein.

Eine Entspiegelungs- oder Antireflexionsbeschichtung dient der Verminderung des Reflexionsgrades an der vergüteten Fläche. Dieser Entspiegelungseffekt wird durch eine destruktive Interferenz der reflektierten Strahlen erreicht. In größerem Ausmaß und über einen breiteren Wellenlängen- und Winkelbereich kann die Reflexion verringert werden durch den Einsatz mehrerer Schichten mit unterschiedlichem Brechungsindex. Für die optimalen Schichtdicken bei gegebener Wahl der Materialien gibt es keine einfache Formel. Diese Parameter werden daher mit Hilfe von Simulationsprogrammen bestimmt. Ein sanfter Übergang des Brechungsindex reduziert den Reflexionsgrad ohne starke Wellenlängen- und Winkelabhängigkeit. Beispiele für Entspiegelungs- oder Antireflexionsbeschichtungen sowie deren Herstellung entnimmt man z.B. den Veröffentlichungen zweier internationaler Patentanmeldungen, nämlich der WO 10/109154 A1 oder der WO 01/55752 A1.

Bei geeigneter Wahl von Schichtfolgen unterschiedlicher Brechungsindices kann auch eine verspiegelnde Wirkung erreicht werden. Die Verspiegelungsbeschichtung wird in diesem Fall durch eine Interferenzbeschichtung gebildet, deren Wirkung auf konstruktiver Interferenz beruht.

Kunststoffbrillenlinsen sind aufgrund der geringen Dichte des Materials sehr leicht. Allerdings ist das Material an der Oberfläche relativ weich und kann somit schnell zerkratzen. Um die Widerstandskraft der Brillenlinsen zu erhöhen, kann man sie mit einer Hartbeschichtung umfassend eine oder mehrere optisch transparente Schichten versiegeln. Das macht die Oberfläche kratzfest und erhöht die Lebensdauer der Brillenlinsen.

Antistatische Beschichtungen für Brillenlinsen aus einer oder mehreren optisch transparenten Schichten verhindern, dass sich die Brillenlinsen statisch aufladen. Sie verhindern, dass Staubpartikel haften bleiben. Beispielhaft sei auf die Offenbarungen der WO 10/109154 A1 und der WO 01/55752 A1 verwiesen.

Das Interferenzschichtsystem der erfindungsgemäßen Brillenlinse ist in besonderer Weise ausgebildet. Das Interferenzschichtsystem besteht in wenigstens einem ersten Oberflächenbereich aus einem eine erste Stapeldicke aufweisenden ersten Schichtstapel, wobei der erste Schichtstapel wenigstens eine, eine erste Schichtdicke aufweisende erste Dünnschicht aus einem optisch transparenten, einen ersten Brechungsindex aufweisenden ersten Material umfasst. In wenigstens einem von dem ersten Oberflächenbereich verschiedenen zweiten Oberflächenbereich besteht das Interferenzschichtsystem aus einem zweiten Schichtstapel mit einer von der ersten Stapeldicke verschiedenen zweiten Stapeldicke, Der zweite Schichtstapel umfasst dabei den wenigstens einen ersten Schichtstapel. Oder anders ausgedrückt ist der erste Schichtstapel Bestandteil des zweiten Schichtstapels und die zweite Stapeldicke ist größer als die erste Stapeldicke. In wenigstens einem von dem ersten Oberflächenbereich und von dem zweiten Oberflächenbereich verschiedenen dritten Oberflächenbereich besteht das Interferenzschichtsystem aus einem, eine von der ersten Stapeldicke und von der zweiten Stapeldicke verschiedene dritte Stapeldicke aufweisenden dritten Schichtstapel. Dieser dritte Schichtstapel umfasst den wenigstens einen zweiten Schichtstapel sowie zusätzlich wenigstens eine, eine zweite Schichtdicke aufweisende zweite Dünnschicht aus einem optisch transparenten und von dem angrenzenden optisch transparenten Material des zweiten Schichtstapels verschiedenen, einen von dem Brechungsindex des angrenzenden optisch transparenten Materials des zweiten Schichtstapels verschiedenen zweiten Brechungsindex aufweisenden zweiten Material.

Die Stapeldicke des dritten Schichtstapels beträgt typischerweise zwischen 200 nm und 600 nm. Die Schichtdicken der Dünnschichten, insbesondere der ersten und zweiten Dünnschicht liegen üblicherweise im Bereich von 20 nm bis 250 nm. Die Brechungsindices dieser Schichten betragen im allgemeinen zwischen 1,4 und 2,5.

Die Erfinder machen sich durch die vorstehend beschriebene Ausbildung einer Brillenlinse den Effekt zunutze, dass optische Schichten auf Gläsern, aufgrund von Lichtreflexion an den Grenzflächen in Verbindung mit Interferenzeffekten, unterschiedliche Farben des reflektierten Lichts hervorrufen können. Durch die erfindungsgemäße örtlich gezielte Stapelung von optischen Schichten mit unterschiedlichen Brechzahlen kann außerdem sowohl eine Verminderung (Entspiegelung) als auch einen Verstärkung (Verspiegelung) der Lichtreflexion des Glases erreicht werden. Daher ist es möglich, sowohl den Farbton als auch die Helligkeit der Reflexfarbe zu beeinflussen.

Durch die vorstehend beschriebenen unterschiedlichen Stapeldicken des Interferenzschichtsystems in unterschiedlichen Bereichen auf dem Linsenkörper lässt sich sowohl der Farbeindruck als auch der Helligkeitseindruck des durch die unterschiedlichen Bereiche gebildeten Zeichens bzw. der durch die unterschiedlichen Bereiche gebildeten Grafik in vorbestimmter Weise erzielen. Die gestellte erste Aufgabe wird durch die Erfindung demzufolge vollumfänglich gelöst.

Um eine hinreichende Unterscheidbarkeit der unterschiedlichen Bereiche in Farbton und/oder Helligkeit unter Tageslichtbedingungen zu erreichen, liegt der Unterschied der Stapeldicken vorzugsweise zwischen 20 nm und 300 nm, höchst vorzugsweise zwischen 40 nm und 200 nm.

Der Linsenkörper hat bei bestimmungsgemäßem Gebrauch eine einem Auge des Brillenträgers zugewandte Rückfläche und eine einem von dem Brillenträger betrachteten Objekt zugewandte Vorderfläche. Das oben beschriebene Interferenzschichtsystem kann nur auf der Vorderfläche oder nur auf der Rückfläche oder auf beiden Flächen des Linsenkörpers angeordnet sein. Dies kann zum einen durch das Herstellungsverfahren des Interferenzschichtsystems begründet sein, zum anderen kann der Grund für die gewählte Ausführung auch in den gewünschten optischen Eigenschaften der Brillenlinse liegen.

Es ist möglich, dass nur die Vorderflächenbeschichtung in vorstehend beschriebener Weise erfindungsgemäß ausgebildet ist. Es kann aber auch sein, dass nur die Rückflächenbeschichtung die oben beschriebenen Bereiche mit unterschiedlich ausgebildeten Schichtstapeln aufweist. Schließlich ist es möglich, dass sowohl die Vorderfläche als auch die Rückfläche des Linsenkörpers ein Interferenzschichtsystem trägt, welche in vorstehend beschriebener Weise unterschiedlich aufgebaute bzw. beschichtete Bereiche aufweist.

Die einfachsten als Antireflexionsbeschichtungen wirkenden Interferenzschichtsysteme, die bei Brillenlinsen zum Einsatz kommen umfassen genau zwei Einzelschichten. Eine entspiegelnde Wirkung aufweisende Interferenzschichtsysteme weisen allerdings heutzutage im Allgemeinen vier oder mehr Einzelschichten auf, wobei jeweils benachbarte Einzelschichten einen unterschiedlichen Brechungsindex aufweisen. Es ist demnach auch möglich, dass der zweite Schichtstapel wenigstens eine dritte Dünnschicht mit einer dritten Schichtdicke aus einem optisch transparenten Material aufweist, das sich von dem angrenzenden optisch transparenten Material des ersten Schichtstapels unterscheidet und einen von dem Brechungsindex des angrenzenden optisch transparenten Materials des ersten Schichtstapels verschiedenen dritten Brechungsindex aufweist. Die Möglichkeiten in der Farbwahl, der Farbabstufung sowie der Helligkeitswahl und der Helligkeitsabstufung erhöhen sich damit signifikant.

Ein flächiges Zeichen, eine Grafik, ein Bild oder ein vorbestimmter Farb- oder Helligkeitsverlauf lassen sich am einfachsten auf einer Brillenlinse erzeugen, wenn eine Mehrzahl an ersten Oberflächenbereichen rasterartig über der Oberfläche verteilt angeordnet ist. Zusätzlich oder alternativ kann zu diesem Zweck auch eine Mehrzahl an zweiten Oberflächenbereichen rasterartig über der Oberfläche des Linsenkörpers verteilt angeordnet sein.

Es ist auch möglich, dass die ersten, zweiten und dritten Oberflächenbereiche (oder ggf. weitere Oberflächenbereiche mit abweichender Schichtstapelung) über der Oberfläche verteilt, eine Rastergrafik bildend zueinander angeordnet sind. Eine Rastergrafik, auch Pixelgrafik (englisch raster graphics image, digital image, bitmap oder pixmap), ist eine Form der Beschreibung eines Bildes. Rastergrafiken bestehen aus einer rasterförmigen Anordnung von so genannten Pixeln (Bildpunkten), denen jeweils eine Farbe zugeordnet ist. Die Hauptmerkmale einer Rastergrafik sind daher die Bildgröße (Breite und Höhe gemessen in Pixeln, umgangssprachlich auch Bildauflösung genannt) sowie die Farbtiefe. Die Anordnung der Oberflächenbereiche in Form einer Rastergrafik erlaubt die Darstellung mehrfarbiger Abbildungen auf einer Brillenlinse. Z.B. Sonnenbrillen oder modische Effektbrillen können mit derartigen Abbildungen in Form von Rastergrafiken ausgebildet sein.

Abbildungen sind auf erfindungsgemäßen Brillenlinsen bei Tageslicht z.B. dann mehrfarbig, wenn der erste Schichtstapel so gewählt ist, dass eine Beleuchtung mit weißem Licht in dem wenigstens einen ersten Oberflächenbereich mit einer ersten Reflexfarbe erscheint, wenn der zweite Schichtstapel so gewählt ist, dass eine Beleuchtung mit weißem Licht in dem wenigstens einen zweiten Oberflächenbereich mit einer von der ersten Reflexfarbe verschiedenen zweiten Reflexfarbe erscheint und wenn der dritte Schichtstapel so gewählt ist, dass eine Beleuchtung mit weißem Licht in dem wenigstens einen dritten Oberflächenbereich mit einer von der ersten Reflexfarbe und mit einer von der zweiten Reflexfarbe verschiedenen dritten Reflexfarbe erscheint.

Echtfarbendarstellungen sind z.B. dann realisierbar, wenn die drei Reflexfarben bei Beleuchtung mit weißem Licht, insbesondere bei Beleuchtung mit Licht des Tageslichtspektrums der Normlichtart D65, die drei Grundfarben des RGB-Farbraums (Abkürzung RGB = Red, Green, Blue = Rot, Grün, Blau) oder die drei Grundfarben des CMY-Farbraums (Abkürzung CMY = Cyan, Magenta, Yellow = Türkis, Purpur, Gelb) sind. Der Bildeindruck entspricht demnach dem eines herkömmlichen Farbfernseh- oder Computerbildschirms. Unterschiedliche Helligkeiten oder Farben entstehen durch gezieltes Fehlen von Pixeln im Raster oder durch gezieltes Ersetzen von Pixeln im Raster durch andere Reflexfarben erzeugende Pixel.

Ein den Ansprüchen der Kunden genügenden Kontrast lässt sich erreichen, wenn der Unterschied der Stapeldicken für unterschiedliche Reflexfarben erzeugende Pixel zwischen 20 nm und 300 nm, insbesondere zwischen 40 nm und 200 nm, liegt. Kontrast (lat. contra "gegen" und stare "stehen") bezeichnet den Unterschied zwischen hellen und dunklen Bereichen eines Bildes (es unterscheidet helle und dunkle Farben). Umgangssprachlich wird auch von Brillanz gesprochen, die aber im Unterschied dazu technisch nicht definiert ist.

Das erfindungsgemäße Verfahren zur Herstellung einer Brillenlinse für einen Brillenträger umfasst folgende Verfahrensschritte:
- Bereitstellen eines eine lichtbrechende Wirkung aufweisenden Linsenkörpers mit einer Oberfläche und mit einem auf der Oberfläche angeordneten Interferenzschichtsystem der nachfolgend beschriebenen Art.
- Abtragen des Interferenzschichtsystems in wenigstens einem ersten Oberflächenbereich, so dass in dem ersten Oberflächenbereich ein eine erste Stapeldicke aufweisender erster Schichtstapel verbleibt,
- Abtragen des Interferenzschichtsystems in wenigstens einem zweiten Oberflächenbereich, so dass in dem zweiten Oberflächenbereich ein eine zweite Stapeldicke aufweisender zweiter Schichtstapel verbleibt, wobei die Stapeldicke des zweiten Schichtstapels, also die zweite Stapeldicke, von der Stapeldicke des ersten Schichtstapels, also der ersten Stapeldicke, verschieden ist.

Das Interferenzschichtsystem besteht bei diesem Verfahren zunächst aus einem Schichtstapel mit einer gewissen Stapeldicke. Entsprechend der vorstehend verwendeten Nomenklatur wird dieser Schichtstapel zur Unterscheidbarkeit von den weiteren nachfolgend beschriebenen Schichtstapeln als dritter Schichtstapel bezeichnet und die entsprechende Dicke des Schichtstapels als dritte Stapeldicke. Der dritte Schichtstapel weist wenigstens eine erste Dünnschicht aus einem optisch transparenten, einen ersten Brechungsindex aufweisenden ersten Material und eine zweite Dünnschicht aus einem optisch transparenten, einen zweiten Brechungsindex aufweisenden zweiten Material auf. Das erste Material der ersten Dünnschicht ist von dem Material der angrenzenden Dünnschicht des dritten Schichtstapels verschieden und der erste Brechungsindex der ersten Dünnschicht ist von dem Brechungsindex der angrenzenden Dünnschicht des dritten Schichtstapels verschieden. In gleicher Weise ist das zweite Material der zweiten Dünnschicht von dem Material der angrenzenden Dünnschicht des dritten Schichtstapels verschieden und der zweite Brechungsindex der zweiten Dünnschicht ist von dem Brechungsindex der angrenzenden Dünnschicht des dritten Schichtstapels verschieden.

Für den Fall, dass der dritte Schichtstapel durch drei Dünnschichten gebildet ist, nämlich der ersten Dünnschicht und der zweiten Dünnschicht sowie einer weiteren Dünnschicht, die zwischen diesen beiden erstgenannten Dünnschichten angeordnet ist, bedeutet diese Maßgabe einerseits, dass sich sowohl die Materialien als auch die entsprechenden Brechungsindices der ersten Dünnschicht und der weiteren Dünnschicht unterscheiden und andererseits, dass sich sowohl die Materialien als auch die entsprechenden Brechungsindices der zweiten Dünnschicht und der weiteren Dünnschicht unterscheiden. Die erste Dünnschicht und die zweite Dünnschicht können in diesem Fall sowohl aus demselben Material gebildet sein als auch denselben Brechungsindex aufweisen. Sie können sich aber auch im Material und im Brechungsindex unterscheiden.

Durch Abtragen des Materials des Interferenzschichtschichtsystems in unterschiedlichen Oberflächenbereichen bis zu unterschiedlichen verbleibenden Stapeldicken lässt sich in einfacher Weise eine Brillenlinse der vorstehend beschriebenen Art fertigen. Durch die erfindungsgemäße gezielte Stapelung von optischen Schichten mit unterschiedlichen Brechungsindices in unterschiedlichen Bereichen auf der Brillenlinse führt die Überlagerung des an unterschiedlichen Grenzflächen reflektierten Lichts in den unterschiedlichen Bereichen zu unterschiedlichen Farben und/oder Helligkeiten. Durch gezielte Steuerung des Materialabtrags in unterschiedlichen Bereichen ist es möglich, sowohl den Farbton als auch die Helligkeit der Reflexfarbe in gewünschter Weise zu beeinflussen.

Durch die vorstehend beschriebenen unterschiedlichen Stapeldicken des

Interferenzschichtsystems in unterschiedlichen Bereichen auf dem Linsenkörper lässt sich sowohl der Farbeindruck als auch der Helligkeitseindruck des durch die unterschiedlichen Bereiche gebildeten Zeichens bzw. der durch die unterschiedlichen Bereiche gebildeten Grafik in vorbestimmter Weise beeinflussen. Die gestellte zweite Aufgabe wird durch die Erfindung demzufolge vollumfänglich gelöst.

Selbstverständlich kann das Interferenzschichtsystem nicht nur in zwei Oberflächenbereichen bis zu unterschiedlichen verbleibenden Stapeldicken abgetragen werden, vielmehr kann das erfindungsgemäße Verfahren den weiteren Verfahrensschritt
- Abtragen des Interferenzschichtsystems in wenigstens einem vierten Oberflächenbereich, so dass in dem vierten Oberflächenbereich ein eine vierte Stapeldicke aufweisender vierter Schichtstapel verbleibt, wobei die vierte Stapeldicke von der ersten Stapeldicke und der zweiten Stapeldicke paarweise verschieden ist.
aufweisen. Durch diese Maßnahme kann eine weitere Abstufung im Farbeindruck und zusätzlich oder alternativ eine zusätzliche Abstufung im Helligkeitseindruck erreicht werden.

Bei den meisten abrasiven Verfahren ist es schwierig reproduzierbar eine einzige materialeinheitliche Dünnschicht bis zu einer vorgegebenen Tiefe abzutragen. Unterschiedliche Materialien innerhalb eines Schichtstapels haben in der Regel aber von der jeweiligen Methode und/oder den jeweiligen Prozessparametern abhängige Abtragraten. Häufig ist ein materialselektiver Abtrag möglich. Anders ausgedrückt kann eine Methode und entsprechende Prozessparameter eine hohe Abtragsrate für ein bestimmtes Dünnschichtmaterial bedeuten und eine sehr geringe Abtragrate für ein anderes Dünnschichtmaterial und umgekehrt kann eine andere Methode mit entsprechenden Prozessparametern zu einer geringen Abtragrate für das bestimmte Dünnschichtmaterial und zu einer hohen Abtragrate für das andere Dünnschichtmaterial führen. Es ist daher in vielen Fällen geschickt, das Material bis zu einer Grenzfläche zwischen zwei Dünnschichten abzutragen.

In lateraler und transversaler Richtung besonders gezielt lässt sich das Abtragen des Interferenzsystems mit Hilfe eines Laserstrahls oder mit Hilfe eines Elektronenstrahls bewerkstelligen. Sowohl die Strahlleistungsdichte am Abtragort als auch die Strahlposition als auch die Strahlausdehnung lässt sich bei Laser- und Elektronenstrahlbearbeitung gezielt einstellen. Eine scannende und/oder rasterartige Strahlführung ist ebenfalls möglich. Die Bearbeitung mittels Laser- und/oder Elektronenstrahl bietet demnach eine hohe Flexibilität und Präzision.

Die durch einen Laserstrahl oder einen Elektronenstrahl am Ort des Abtrags eingebrachte Energiedichte liegt üblicherweise zwischen 0,2 J/cm² und 20 J/cm². Der Strahldurchmesser liegt im Allgemeinen zwischen 20 µm und 80 µm. Der entstehende Durchmesser eines auf diese Weise erzeugten Pixels auf der Brillenlinse beträgt dann zwischen 30 µm und 120 µm. Der Abtrag kann lateral zwischen 0 mm und 100 mm und transversal (Abtragstiefe) zwischen 5 nm und 500 nm betragen.

Der Laserstrahl oder der Elektronenstrahl kann beispielsweise derart rasterartig über die Brillenlinse geführt werden, dass eine Mehrzahl rasterartig angeordnete, pixelförmige erste Oberflächenbereiche mit dem ersten Schichtstapel erzeugt werden und/oder dass eine Mehrzahl rasterartig angeordnete, pixelförmige zweite Oberflächenbereiche mit dem zweiten Schichtstapel erzeugt werden und/oder dass eine Mehrzahl rasterartig angeordnete, pixelförmige dritte Oberflächenbereiche mit dem dritten Schichtstapel erzeugt werden und/oder dass eine Mehrzahl rasterartig angeordnete, pixelförmige vierte Oberflächenbereiche mit dem vierten Schichtstapel erzeugt werden. Eine rasterartige Anordnung gleicher Schichtstapel nimmt ein Betrachter als flächige Anordnung wahr.

Die Raster unterschiedlicher Schichtstapel können räumlich getrennt voneinander angeordnet werden, so dass in den entsprechenden Bereichen ein allein durch die Interferenzwirkung des in dem jeweiligen Bereich angeordneten Schichtstapels hervorgerufener Farb- und Helligkeitseindruck entsteht. Die Raster der unterschiedlichen Schichtstapel können auch ineinander greifen, so dass ein durch die Interferenzwirkung aller in dem jeweiligen Bereich angeordneten unterschiedlichen Schichtstapel hervorgerufener Farb- und Helligkeitseindruck entsteht.

Der erste Schichtstapel kann so gewählt sein, dass eine Beleuchtung mit weißem Licht in dem wenigstens einen ersten Oberflächenbereich mit einer ersten Reflexfarbe erscheint. Gleichzeitig kann der zweite Schichtstapel so gewählt sein, dass eine Beleuchtung mit weißem Licht in dem wenigstens einen zweiten Oberflächenbereich mit einer von der ersten Reflexfarbe verschiedenen zweiten Reflexfarbe erscheint und weiterhin gleichzeitig kann der dritte Schichtstapel so gewählt sein, dass eine Beleuchtung mit weißem Licht in dem wenigstens einen dritten Oberflächenbereich mit einer von der ersten Reflexfarbe und mit einer von der zweiten Reflexfarbe verschiedenen dritten Reflexfarbe erscheint.

Der erste Schichtstapel kann auch so gewählt sein, dass eine Beleuchtung mit weißem Licht in dem wenigstens einen ersten Oberflächenbereich mit einer ersten Reflexfarbe erscheint, dass der zweite Schichtstapel so gewählt ist, dass eine Beleuchtung mit weißem Licht in dem wenigstens einen zweiten Oberflächenbereich mit einer von der ersten Reflexfarbe verschiedenen zweiten Reflexfarbe erscheint und dass eine Beleuchtung mit weißem Licht in dem wenigstens einen vierten Oberflächenbereich mit einer von der ersten Reflexfarbe und mit einer von der zweiten Reflexfarbe verschiedenen vierten Reflexfarbe erscheint.

Wie oben bereits im Zusammenhang mit der Brillenlinse erläutert wurde, sind Echtfarbendarstellungen z.B. dann realisierbar, wenn die drei Reflexfarben bei Beleuchtung mit weißem Licht, insbesondere bei Beleuchtung mit Licht des Tageslichtspektrums der Normlichtart D65, die drei Grundfarben des RGB-Farbraums oder die drei Grundfarben des CMY-Farbraums sind. Unterschiedliche Helligkeiten oder Farben können durch gezieltes Auslassen von Pixeln im Raster oder durch gezieltes Ersetzen von Pixeln im Raster durch andere Reflexfarben erzeugende Pixel erzeugt werden.

Es ist nach der Erfindung auch möglich, dass der Abtrag insbesondere durch den Laser- oder Elektronenstrahl derart eingestellt wird, dass die rasterartig angeordneten bzw. in rasterartiger Anordnung erzeugten, pixelförmigen ersten Oberflächenbereiche in einer ersten Oberflächenregion der Brillenlinse ein erstes Rastermaß aufweisen und dass die rasterartig angeordneten bzw. in rasterartiger Anordnung erzeugten, pixelförmigen ersten Oberflächenbereiche in einer zweiten Oberflächenregion der Brillenlinse ein zweites von dem ersten Rastermaß verschiedenes Rastermaß aufweisen.

In entsprechender Weise kann der Abtrag auch so durchgeführt werden, dass die in rasterartiger Anordnung erzeugten, pixelförmigen zweiten Oberflächenbereiche in einer dritten Oberflächenregion der Brillenlinse ein drittes Rastermaß aufweisen und dass die in rasterartiger Anordnung erzeugten, pixelförmigen zweiten Oberflächenbereiche in einer vierten Oberflächenregion der Brillenlinse ein viertes von dem dritten Rastermaß verschiedenes Rastermaß aufweisen oder dass die rasterartig angeordneten, pixelförmigen dritten Oberflächenbereiche in einer fünften Oberflächenregion der Brillenlinse ein fünftes Rastermaß aufweisen und dass die rasterartig angeordneten, pixelförmigen dritten Oberflächenbereiche in einer sechsten Oberflächenregion der Brillenlinse ein sechstes von dem fünften Rastermaß verschiedenes Rastermaß aufweisen oder dass die rasterartig angeordneten, pixelförmigen vierten Oberflächenbereiche in einer siebenten Oberflächenregion der Brillenlinse ein siebentes Rastermaß aufweisen und dass die rasterartig angeordneten, pixelförmigen vierten Oberflächenbereiche in einer achten Oberflächenregion der Brillenlinse ein achtes von dem siebenten Rastermaß verschiedenes Rastermaß aufweisen.

Die Erfindung sieht weiterhin ein Computerprogramm mit Programmcode zur Durchführung des oben beschriebenen Verfahrens vor, wenn das Programm auf einem Computer ausgeführt wird. Insbesondere kann das Computerprogramm der Steuerung des Abtragsorts der o.a. Laser- oder Elektronenstrahlen und/oder der Einstellung deren Energiedichte und Verweildauer am Abtragsort auf der Brillenlinse dienen.

Die erfindungsgemäße Vorrichtung zur Herstellung einer Brillenlinse für einen Brillenträger umfasst einen Träger zum Bereitstellen eines eine lichtbrechende Wirkung aufweisenden Linsenkörpers mit einer Oberfläche und mit einem auf der Oberfläche angeordneten Interferenzschichtsystem und einer Abtrageeinrichtung zum Abtragen des Interferenzschichtsystems in unterschiedlichen Oberflächenbereichen.

Die Abtrageeinrichtung ist nach der Erfindung in besonderer Weise eingerichtet und ausgebildet. Wird auf dem Träger ein Linsenkörper mit Interferenzschichtsystem angeordnet, welches aus einem eine dritte Stapeldicke aufweisenden dritten Schichtstapel besteht, wobei der dritte Schichtstapel wenigstens eine erste Dünnschicht aus einem optisch transparenten, einen ersten Brechungsindex aufweisenden ersten Material und eine zweite Dünnschicht aus einem optisch transparenten, einen zweiten Brechungsindex aufweisenden zweiten Material aufweist, wobei das erste Material von dem Material der angrenzenden Dünnschicht des dritten Schichtstapels verschiedenen ist, wobei der erste Brechungsindex von dem Brechungsindex der angrenzenden Dünnschicht des dritten Schichtstapels verschiedenen ist, wobei das zweite Material von dem Material der angrenzenden Dünnschicht des dritten Schichtstapels verschiedenen ist, wobei der zweite Brechungsindex von dem Brechungsindex der angrenzenden Dünnschicht des dritten Schichtstapels verschiedenen ist, so soll die Abtrageeinrichtung zum Abtragen des Interferenzschichtsystems in wenigstens einem ersten Oberflächenbereich eingerichtet und ausgebildet sein, dass in dem ersten Oberflächenbereich ein eine erste Stapeldicke aufweisender erster Schichtstapel verbleibt, und zum Abtragen des Interferenzschichtsystems in wenigstens einem zweiten Oberflächenbereich, dass in dem zweiten Oberflächenbereich ein eine zweite Stapeldicke aufweisender zweiter Schichtstapel verbleibt, wobei die zweite Stapeldicke und die erste Stapeldicke verschieden sind.

Durch die unterschiedlichen Stapeldicken des Interferenzschichtsystems in unterschiedlichen Bereichen auf dem Linsenkörper lässt sich sowohl der Farbeindruck als auch der Helligkeitseindruck des durch die unterschiedlichen Bereiche gebildeten Zeichens bzw. der durch die unterschiedlichen Bereiche gebildeten Grafik in vorbestimmter Weise erzielen. Die gestellte dritte Aufgabe wird durch die Erfindung demzufolge vollumfänglich gelöst.

Die Erfindung wird nachfolgend anhand der Zeichnungen erläutert. Baugleiche Bestandteile sind in den Figuren mit identischen Bezugszeichen gekennzeichnet. Mit dem Ausdruck "erfindungsgemäße Brillenlinse" wird in dieser Beschreibung eine mit einem erfindungsgemäßen Verfahren hergestellte Brillenlinse bezeichnet. Es zeigen:
- Figur 1: einen Ausschnitt eines Querschnitts durch eine erfindungsgemäße Brillenlinse mit Linsenkörper und Interferenzschichtsystem gemäß einem ersten Ausführungsbeispiel
- Figur 2: einen Ausschnitt eines Querschnitts durch eine erfindungsgemäße Brillenlinse mit Linsenkörper und Interferenzschichtsystem gemäß einem zweiten Ausführungsbeispiel
- Figur 3: einen Ausschnitt eines Querschnitts durch eine erfindungsgemäße Brillenlinse mit Linsenkörper und Interferenzschichtsystem gemäß einem dritten Ausführungsbeispiel
- Figur 4: einen Ausschnitt eines Querschnitts durch eine erfindungsgemäße Brillenlinse mit Linsenkörper und Interferenzschichtsystem gemäß einem vierten Ausführungsbeispiel
- Figur 5: einen Ausschnitt einer erfindungsgemäßen Brillenlinse mit Linsenkörper und Interferenzschichtsystem gemäß einem fünften Ausführungsbeispiel in Draufsicht
- Figur 6: ein Beispiel eines unterschiedlichen Schichtabtrags durch variable Laserenergieeinwirkung
- Figur 7: Mikroskopaufnahmen einer Lasergravur mit schwacher Laserbehandlung 1 J/cm² auf einer speziell für "Grundfarbwirkung" aufgebauten Verspiegelungsbeschichtung.
a) Übersichtsdarstellung
b) vergrößerte Darstellung
- Figur 8: Mikroskopaufnahmen einer Lasergravur mit starker Laserbehandlung 12 J/cm² auf einer speziell für "Grundfarbwirkung" aufgebauten Verspiegelungsbeschichtung.
a) Übersichtsdarstellung
b) vergrößerte Darstellung
   Die Beschichtung entspricht der nach dem Ausführungsbeispiel nach der Figur 7.
- Figur 9: eine erfindungsgemäße auf der Lasergravurtechnik basierende Vorrichtung zur Herstellung einer erfindungsgemäßen Brillenlinse in schematischer Darstellung

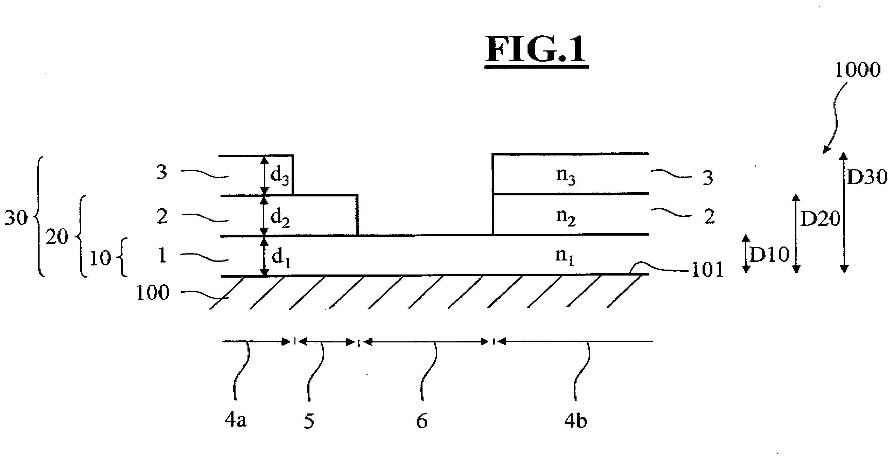

Die Figur 1 zeigt einen Ausschnitt eines Querschnitts durch eine erfindungsgemäße Brillenlinse 1000 mit Linsenkörper 100 und Interferenzschichtsystem nach einem ersten Ausführungsbeispiel. Der Linsenkörper 100 weist eine lichtbrechende Wirkung auf.

Auf der Oberfläche 101 des Linsenkörpers 100 ist ein Interferenzschichtsystem aufgebracht. Das Interferenzschichtsystem besteht in einem ersten Oberflächenbereich 6 aus einer einzigen Dünnschicht 1 mit einer Dicke d₁. Diese Dünnschicht 1 besteht aus einem Material mit einem Brechungsindex n₁. Der erste Schichtstapel 10 in diesem ersten Oberflächenbereich 6 hat also eine erste Stapeldicke D₁₀, die der Schichtdicke d₁ der Dünnschicht 1 entspricht.

Das Interferenzschichtsystem besteht in einem zweiten Oberflächenbereich 5 aus zwei Dünnschichten, nämlich der Dünnschicht 1 mit der Dicke d₁ und einer Dünnschicht 2 mit einer Dicke d₂. Die Dünnschicht 2 besteht aus einem Material mit einem Brechungsindex n₂. Der zweite Schichtstapel 20 in diesem zweiten Oberflächenbereich 5 hat also eine zweite Stapeldicke D₂₀, die der Summe der Schichtdicken d₁ und d₂ der Dünnschichten 1 und 2 entspricht.

Das Interferenzschichtsystem besteht in zwei gleichartigen dritten Oberflächenbereichen 4a, 4b aus drei Dünnschichten, nämlich der Dünnschicht 1 mit der Dicke d₁, der Dünnschicht 2 mit einer Dicke d₂ und einer Dünnschicht 3 mit der Dicke d₃. Die Dünnschicht 3 besteht aus einem Material mit einem Brechungsindex n₃. Der dritte Schichtstapel 30 in diesen dritten Oberflächenbereichen 4a, 4b hat also eine dritte Stapeldicke D₃₀, die der Summe der Schichtdicken d₁, d₂ und d₃ der Dünnschichten 1, 2 und 3 entspricht. Die Brechungsindices n₁, und n₂ sowie n₂ und n₃ sind jeweils paarweise verschieden. Die Brechungsindices n₁ und n₃ können identisch oder verschieden sein. Dasselbe gilt für die Materialien.

Hergestellt werden kann dieses Interferenzschichtsystem dadurch, dass der die lichtbrechende Wirkung aufweisende Linsenkörper 100 bereitgestellt wird, dessen Oberfläche 101 ganzflächig mit einem Interferenzschichtsystem beschichtet ist, das aus dem die dritte Stapeldicke D₃₀ aufweisenden dritten Schichtstapel 30 besteht. Das Interferenzschichtsystem wird nun in dem ersten Oberflächenbereich 6 abgetragen, so dass in dem ersten Oberflächenbereich 6 der die erste Stapeldicke D₁₀ aufweisende erste Schichtstapel 10 verbleibt. Weiter wird das Interferenzschichtsystem in dem zweiten Oberflächenbereich 5 derart abgetragen, dass in dem zweiten Oberflächenbereich 5 der die zweite Stapeldicke D₂₀ aufweisende zweite Schichtstapel 20 verbleibt. Welcher dieser Schritte zuerst durchgeführt wird und oder ob diese Schritte teilweise oder vollständig gleichzeitig durchgeführt werden spielt keine Rolle.

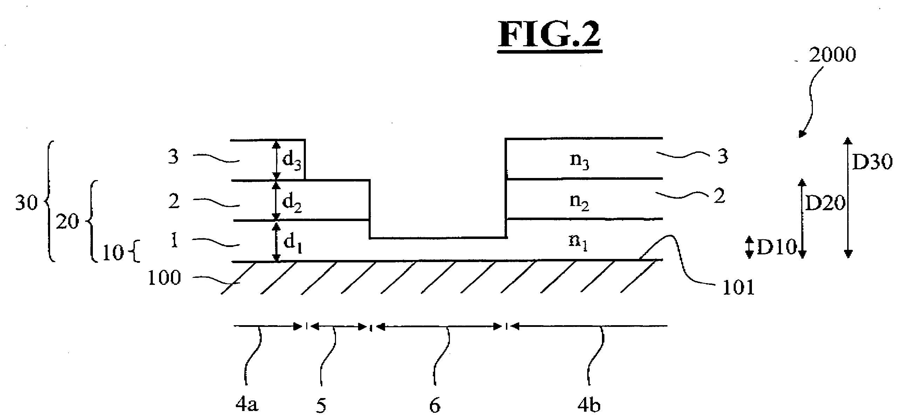

Die Figur 2 zeigt einen Ausschnitt eines Querschnitts durch eine erfindungsgemäße Brillenlinse 2000 mit Linsenkörper 100 und Interferenzschichtsystem nach einem zweiten Ausführungsbeispiel. Der Linsenkörper 100 weist eine lichtbrechende Wirkung auf.

Auf der Oberfläche 101 des Linsenkörpers 100 ist ein Interferenzschichtsystem aufgebracht.

Das Interferenzschichtsystem besteht wie beim vorangegangenen Ausführungsbeispiel in den zwei gleichartigen dritten Oberflächenbereichen 4a, 4b aus drei Dünnschichten, nämlich einer Dünnschicht 1 mit einer Dicke d₁, einer Dünnschicht 2 mit einer Dicke d₂ und einer Dünnschicht 3 mit einer Dicke d₃. Die Dünnschicht 1 besteht aus einem Material mit einem Brechungsindex n₁. Die Dünnschicht 2 besteht aus einem Material mit einem Brechungsindex n₂. Die Dünnschicht 3 besteht aus einem Material mit einem Brechungsindex n₃. Der dritte Schichtstapel 30 in diesen dritten Oberflächenbereichen 4a, 4b hat also eine dritte Stapeldicke D₃₀, die der Summe der Schichtdicken d₁, d₂ und d₃ der Dünnschichten 1, 2 und 3 entspricht. Die Brechungsindices n₁ und n₂ sowie n₂ und n₃ sind jeweils paarweise verschieden. Die Brechungsindices n₁ und n₃ können identisch oder verschieden sein. Dasselbe gilt für die Materialien.

Das Interferenzschichtsystem besteht auch in dem zweiten Oberflächenbereich 5 aus zwei Dünnschichten, nämlich der Dünnschicht 1 mit der Dicke d₁ und der Dünnschicht 2 mit der Dicke d₂. Der zweite Schichtstapel 20 in diesem zweiten Oberflächenbereich 5 hat also eine zweite Stapeldicke D₂₀, die der Summe der Schichtdicken d₁ und d₂ der Dünnschichten 1 und 2 entspricht.

Das Interferenzschichtsystem besteht allerdings anders als beim vorangegangenen Ausführungsbeispiel in dem ersten Oberflächenbereich 6 lediglich aus einem Teil der Dünnschicht 1 mit einer Dicke d₁. Die erste Stapeldicke D₁₀ des ersten Schichtstapels 10 in diesem ersten Oberflächenbereich 6 entspricht also nicht der Schichtdicke d₁ der Dünnschicht 1, sondern diese Stapeldicke D₁₀ ist kleiner als die Schichtdicke d₁ der Dünnschicht 1.

Hergestellt werden kann dieses Interferenzschichtsystem wie im vorangegangenen Ausführungsbeispiel dadurch, dass zunächst der die lichtbrechende Wirkung aufweisende Linsenkörper 100 bereitgestellt wird, dessen Oberfläche 101 ganzflächig mit dem Interferenzschichtsystem beschichtet ist, das aus dem die dritte Stapeldicke D₃₀ aufweisenden dritten Schichtstapel 30 besteht. Das Interferenzschichtsystem wird nun in dem zweiten Oberflächenbereich 5 derart abgetragen, dass in dem zweiten Oberflächenbereich 5 der die zweite Stapeldicke D₂₀ aufweisende zweite Schichtstapel 20 verbleibt. Weiter wird das Interferenzschichtsystem in dem ersten Oberflächenbereich 6 abgetragen, so dass in dem ersten Oberflächenbereich 6 der die erste Stapeldicke D₁₀ aufweisende erste Schichtstapel 10 verbleibt. Allerdings wird bei zuletzt genanntem Prozessschritt mehr Material abgetragen als beim entsprechenden Prozessschritt des zuvor beschriebenen Beispiels. Welcher dieser Schritte zuerst durchgeführt wird und oder ob diese Schritte teilweise oder vollständig gleichzeitig durchgeführt werden spielt wiederum grundsätzlich keine Rolle.

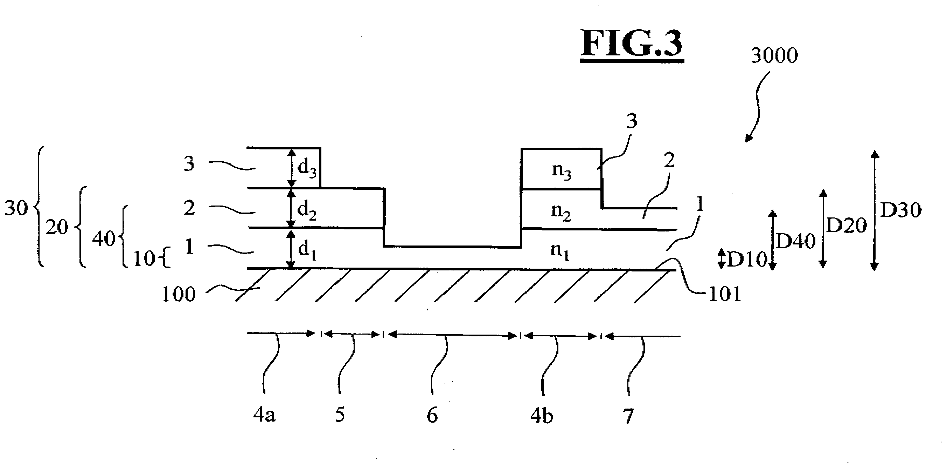

Die Figur 3 zeigt einen Ausschnitt eines Querschnitts durch eine erfindungsgemäße Brillenlinse 3000 mit Linsenkörper 100 und Interferenzschichtsystem nach einem dritten Ausführungsbeispiel.

Auf der Oberfläche 101 des Linsenkörpers 100 ist ein Interferenzschichtsystem aufgebracht.

Das Interferenzschichtsystem besteht wie beim vorangegangenen Ausführungsbeispiel in den zwei gleichartigen dritten Oberflächenbereichen 4a, 4b aus drei Dünnschichten, nämlich einer Dünnschicht 1 mit einer Dicke d₁, einer Dünnschicht 2 mit einer Dicke d₂ und einer Dünnschicht 3 mit einer Dicke d₃. Die Dünnschicht 1 besteht aus einem Material mit einem Brechungsindex n₁. Die Dünnschicht 2 besteht aus einem Material mit einem Brechungsindex n₂. Die Dünnschicht 3 besteht aus einem Material mit einem Brechungsindex n₃. Der dritte Schichtstapel 30 in diesen dritten Oberflächenbereichen 4a, 4b hat also eine dritte Stapeldicke D₃₀, die der Summe der Schichtdicken d₁, d₂ und d₃ der Dünnschichten 1, 2 und 3 entspricht. Die Brechungsindices n₁ und n₂ sowie n₂ und n₃ sind jeweils paarweise verschieden. Die Brechungsindices n₁ und n₃ können identisch oder verschieden sein. Dasselbe gilt für die Materialien.

Das Interferenzschichtsystem besteht auch in dem zweiten Oberflächenbereich 5 aus zwei Dünnschichten, nämlich der Dünnschicht 1 mit der Dicke d₁ und der Dünnschicht 2 mit der Dicke d₂. Der zweite Schichtstapel 20 in diesem zweiten Oberflächenbereich 5 hat also eine zweite Stapeldicke D₂₀, die der Summe der Schichtdicken d₁ und d₂ der Dünnschichten 1 und 2 entspricht.

Das Interferenzschichtsystem besteht wie beim vorangegangenen Ausführungsbeispiel in dem ersten Oberflächenbereich 6 lediglich aus einem Teil der Dünnschicht 1 mit einer Dicke d₁. Die erste Stapeldicke D₁₀ des ersten Schichtstapels 10 in diesem ersten Oberflächenbereich 6 entspricht also nicht der Schichtdicke d₁ der Dünnschicht 1, sondern diese Stapeldicke D₁₀ ist kleiner als die Schichtdicke d₁ der Dünnschicht 1.

Zusätzlich zu den Schichtstapeln 10, 20, 30 des vorangegangenen Ausführungsbeispiels ist ein weiterer vierter Oberflächenbereich 7 vorgesehen, in dem ein vierter von den anderen drei Schichtstapeln 10, 20, 30 verschiedener Schichtstapel 40 der Stapeldicke D₄₀ vorhanden ist. Der Schichtstapel 40 umfasst die Dünnschicht 1 vollständig und die Dünnschicht 2 zum Teil. Die Stapeldicke D₄₀ ist also kleiner als die Summe der Schichtdicken d₁ und d2.

Hergestellt werden kann dieses Interferenzschichtsystem analog zu den vorangegangenen Ausführungsbeispielen dadurch, dass zunächst der die lichtbrechende Wirkung aufweisende Linsenkörper 100 bereitgestellt wird, dessen Oberfläche 101 ganzflächig mit dem Interferenzschichtsystem beschichtet ist, das aus dem die dritte Stapeldicke D₃₀ aufweisenden dritten Schichtstapel 30 besteht. Das Interferenzschichtsystem wird nun in dem zweiten Oberflächenbereich 5 derart abgetragen, dass in dem zweiten Oberflächenbereich 5 der die zweite Stapeldicke D₂₀ aufweisende zweite Schichtstapel 20 verbleibt. Weiter wird das Interferenzschichtsystem in dem ersten Oberflächenbereich 6 abgetragen, so dass in dem ersten Oberflächenbereich 6 der die erste Stapeldicke D₁₀ aufweisende erste Schichtstapel 10 verbleibt. Schließlich wird das Interferenzschichtsystem in dem vierten Oberflächenbereich 7 abgetragen, so dass in dem vierten Oberflächenbereich 7 der die vierte Stapeldicke D₄₀ aufweisende vierte Schichtstapel 40 verbleibt. Welcher dieser Schritte zuerst durchgeführt wird und oder ob diese Schritte teilweise oder vollständig gleichzeitig durchgeführt werden ist unerheblich.

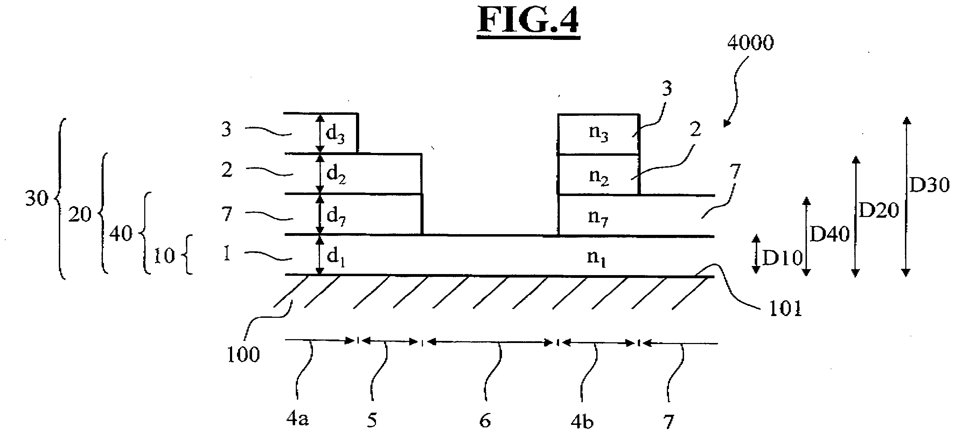

Die Figur 4 zeigt einen Ausschnitt eines Querschnitts durch eine erfindungsgemäße Brillenlinse 4000 mit Linsenkörper 100 und Interferenzschichtsystem nach einem vierten Ausführungsbeispiel.

Auf der Oberfläche 101 des Linsenkörpers 100 ist wie in den vorangegangenen Ausführungsbeispielen ein Interferenzschichtsystem aufgebracht.

Das Interferenzschichtsystem stellt eine verwandte Variante zu den Ausführungsbeispielen nach den Figuren 1 und 3 dar. Das Interferenzschichtsystem besteht in den zwei gleichartigen dritten Oberflächenbereichen 4a, 4b aus vier Dünnschichten, nämlich einer Dünnschicht 1 mit einer Dicke d₁, einer Dünnschicht 2 mit einer Dicke d₂, einer Dünnschicht 3 mit einer Dicke d₃ und einer Dünnschicht 7 mit einer Dicke d₇. Die Dünnschicht 1 besteht aus einem Material mit einem Brechungsindex n₁. Die Dünnschicht 2 besteht aus einem Material mit einem Brechungsindex n₂. Die Dünnschicht 3 besteht aus einem Material mit einem Brechungsindex n₃. Die Dünnschicht 7 besteht aus einem Material mit einem Brechungsindex n₇. Der dritte Schichtstapel 30 in diesen dritten Oberflächenbereichen 4a, 4b hat also eine dritte Stapeldicke D₃₀, die der Summe der Schichtdicken d₁, d₂, d₃ und d₇ der Dünnschichten 1, 2, 3 und 7 entspricht. Die Brechungsindices n₁ und n₇, n₇ und n₂ sowie n₂ und n₃ benachbarter Dünnschichten 1, 2, 3, 7 sind jeweils paarweise verschieden. Die Brechungsindices n₁, n₂, n₃ und n₇ nicht benachbart angeordneter Dünnschichten können identisch oder verschieden sein. Dasselbe gilt für die Materialien.

Das Interferenzschichtsystem besteht in dem zweiten Oberflächenbereich 5 aus drei Dünnschichten, nämlich der Dünnschicht 1 mit der Dicke d₁, der Dünnschicht 7 mit der Dicke d₇ und der Dünnschicht 2 mit der Dicke d₂. Der zweite Schichtstapel 20 in diesem zweiten Oberflächenbereich 5 hat also eine zweite Stapeldicke D₂₀, die der Summe der Schichtdicken d₁, d₇ und d₂ der Dünnschichten 1, 7 und 2 entspricht.

Das Interferenzschichtsystem besteht in dem ersten Oberflächenbereich 6 aus der Dünnschicht 1 mit einer Dicke d₁. Die erste Stapeldicke D₁₀ des ersten Schichtstapels 10 in diesem ersten Oberflächenbereich 6 entspricht also der Schichtdicke d₁ der Dünnschicht 1.

Zusätzlich zu den Schichtstapeln 10, 20, 30 ist ein weiterer vierter Oberflächenbereich 7 vorgesehen, in dem ein vierter von den anderen drei Schichtstapeln 10, 20, 30 verschiedener Schichtstapel 40 der Stapeldicke D₄₀ vorhanden ist. Der Schichtstapel 40 umfasst die Dünnschicht 1 und die Dünnschicht 7 vollständig. Die Stapeldicke D₄₀ entspricht also der Summe der Schichtdicken d₁ und d₇.

Hergestellt werden kann dieses Interferenzschichtsystem analog zu den vorangegangenen Ausführungsbeispielen dadurch, dass zunächst der die lichtbrechende Wirkung aufweisende Linsenkörper 100 bereitgestellt wird, dessen Oberfläche 101 ganzflächig mit dem Interferenzschichtsystem beschichtet ist, das aus dem die dritte Stapeldicke D₃₀ aufweisenden dritten Schichtstapel 30 besteht. Das Interferenzschichtsystem wird nun in dem zweiten Oberflächenbereich 5 derart abgetragen, dass in dem zweiten Oberflächenbereich 5 der die zweite Stapeldicke D₂₀ aufweisende zweite Schichtstapel 20 verbleibt. Weiter wird das Interferenzschichtsystem in dem ersten Oberflächenbereich 6 abgetragen, so dass in dem ersten Oberflächenbereich 6 der die erste Stapeldicke D₁₀ aufweisende erste Schichtstapel 10 verbleibt. Schließlich wird das Interferenzschichtsystem in dem vierten Oberflächenbereich 7 abgetragen, so dass in dem vierten Oberflächenbereich 7 der die vierte Stapeldicke D₄₀ aufweisende vierte Schichtstapel 40 verbleibt. Welcher dieser Schritte zuerst durchgeführt wird und oder ob diese Schritte teilweise oder vollständig gleichzeitig durchgeführt werden ist wiederum ohne Bedeutung.

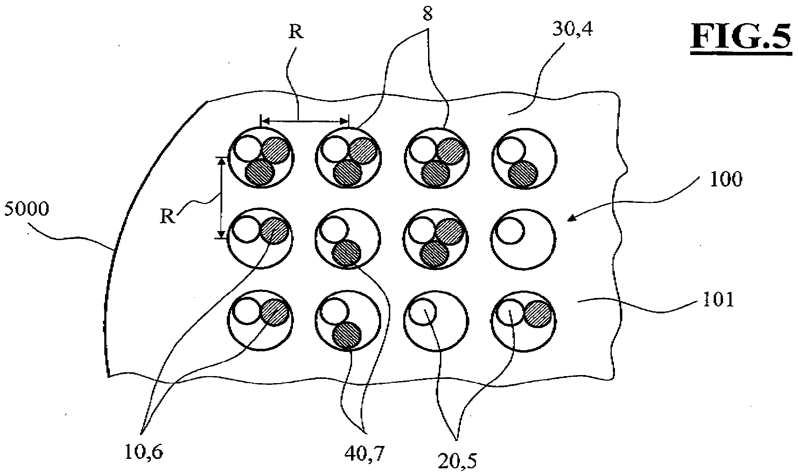

Die Figur 5 zeigt einen Ausschnitt einer erfindungsgemäßen Brillenlinse 5000 mit Linsenkörper 100 und auf dessen Oberfläche aufgebrachtem Interferenzschichtsystem gemäß einem fünften Ausführungsbeispiel in Draufsicht.

Das Interferenzschichtsystem weist in unterschiedlichen Oberflächenbereichen 4, 5, 6, 7 unterschiedliche Schichtstapel 10, 20, 30, 40 unterschiedlicher Schichtdicken auf. Beispielhaft sei auf die Schichtstapel nach den Figuren 3 und 4 verwiesen.

Nehmen wir für die folgende Erläuterung an, dass die Brillenlinse 5000 mit den Schichtstapeln 10, 20, 30, 40 nach der Figur 4 versehen ist. Der Großteil der Oberfläche 101 des Linsenkörpers 100, welche durch das Bezugszeichen 4 gekennzeichnet ist, trägt demnach vier Dünnschichten, nämlich die Dünnschicht 1 mit der Dicke d₁, die Dünnschicht 2 mit der Dicke d₂, die Dünnschicht 3 mit der Dicke d₃ und die Dünnschicht 7 mit der Dicke d₇. Der Schichtstapel 30 in diesem Oberflächenbereich 4 hat also eine Stapeldicke D₃₀, die der Summe der Schichtdicken d₁, d₂, d₃ und d₇ der Dünnschichten 1, 2, 3 und 7 entspricht.

Rasterartig in dem Rastermaß R angeordnet sind kreisförmige Oberflächenbereiche 5, 6, 7 auf entsprechenden Rasterplätzen 8 angeordnet. Die Verbindungslinien der Mittelpunkte jeweils dreier unterschiedlicher und auf einem Rasterplatz 8 angeordneten Oberflächenbereiche 5, 6, 7 bilden dabei ein gleichseitiges Dreieck.

Das Interferenzschichtsystem besteht in dem Oberflächenbereich 5 aus drei Dünnschichten, nämlich der Dünnschicht 1 mit der Dicke d₁, der Dünnschicht 7 mit der Dicke d₇ und der Dünnschicht 2 mit der Dicke d₂. Der zweite Schichtstapel 20 in diesem zweiten Oberflächenbereich 5 hat also eine zweite Stapeldicke D₂₀, die der Summe der Schichtdicken d₁, d₇ und d₂ der Dünnschichten 1, 7 und 2 entspricht.

Das Interferenzschichtsystem besteht in dem Oberflächenbereich 6 aus der Dünnschicht 1 mit einer Dicke d₁. Die erste Stapeldicke D₁₀ des ersten Schichtstapels 10 in diesem ersten Oberflächenbereich 6 entspricht also der Schichtdicke d₁ der Dünnschicht 1.

Der vierte Oberflächenbereich 7 umfasst den Schichtstapel 40 mit der Dünnschicht 1 und der Dünnschicht 7. Die Stapeldicke D₄₀ entspricht also der Summe der Schichtdicken d₁ und d₇.

Wird die gesamte Oberfläche der Brillenlinse 5000 mit weißem Licht beleuchtet, so erscheint der Oberflächenbereich 5 mit einer ersten Reflexfarbe, der Oberflächenbereich 6 mit einer zweiten Reflexfarbe und der Oberflächenbereich 7 mit einer dritten Reflexfarbe. Der übrige Oberflächenbereich 4 hat als Hintergrund eine weitere Reflexfarbe. Üblicherweise wird der Hintergrund eine "neutrale" Farbe aufweisen, während es günstig ist, für die drei Reflexfarben durch geeignete Wahl der Stapeldicken 20, 10, 40 in diesen Bereichen 5, 6, 7 die Grundfarben des RGB-Farbraums oder die drei Grundfarben des CMY-Farbraums "einzustellen".

Sind nicht alle Rasterplätze 8 des Rasters mit allen drei Oberflächenbereichen 5, 6, 7 "besetzt" und wählt man unterschiedliche laterale Ausdehnungen der drei Oberflächenbereiche 5, 6, 7 innerhalb eines Rasterplatzes 8, lässt sich eine farbige Rastergraphik ähnlich wie auf einem Computerdisplay erzeugen.

Anhand der Zeichnungsfiguren 6 bis 8 wird nachfolgend an Beispiel eines aus Siliziumoxid und Titanoxid bestehenden Interferenzsystems gezeigt, wie mittels Laserablation Strukturen auf einer Brillenlinse erzeugt werden können, die einen unterschiedlichen Farbeindruck bei Bestrahlung mit weißem Licht für den Beobachter ergeben.

Es ist bekannt, dass die verschiedenen Schichtmaterialien eines Schichtstapels, z. B. Siliziumoxid oder Titanoxid, durch Lasereinwirkung unterschiedlich abgetragen werden. Die Abtragsrate hängt von der eingetragenen Energie über die Zeit und der auf die Fläche bezogenen Energiedichte des Laserstrahls ab. Daher ist es prinzipiell möglich, den Abtrag des Schichtstapels bis zu einem Übergang zwischen zwei unterschiedlichen Schichtmaterialien (Grenzfläche) zu begrenzen.

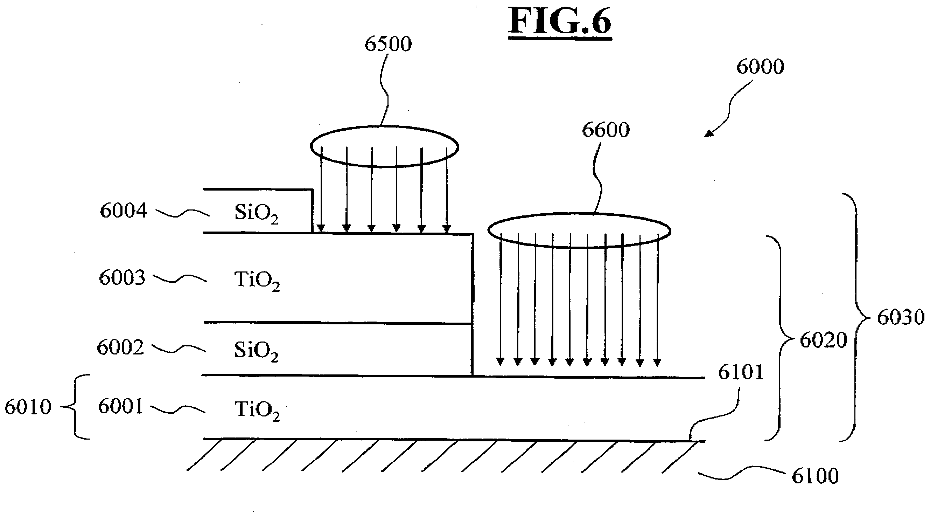

In Figur 6 ist ein Ausschnitt einer Brillenlinse 6000 im Querschnitt dargestellt. Die Brillenlinse 6000 umfasst einen Linsenkörper 6100 mit einer Oberfläche 6101. Auf der Oberfläche 6101 ist ein Schichtstapel 6030 aus Siliziumoxid 6002, 6004 und Titanoxid 6001, 6003 aufgebracht. Die einzelnen Schichtmaterialien Siliziumoxid 6002, 6004 und Titanoxid 6001, 6003 werden durch Laserstrahleinwirkung unterschiedlich stark abgetragen indem z. B. der Laser nur kurz und mit geringer Leistung (schwache Lasereinwirkung 6500) oder wiederholt und/oder mit erhöhter Leistung (starke Lasereinwirkung 6600) einwirkt.

Über die gezielte Wahl von Schichtmaterial, Schichtdicke und Lasereinwirkung lassen sich unterschiedliche Farbreflexe einstellen. Über die rasterartige Laserbearbeitung lassen sich auf diese Weise sowohl einzelne Farbpunkte (Pixel) oder ganze Farbflächen auf der Glasoberfläche erzeugen. Mit Pixeln in drei Grundfarben ist auch die Erzeugung von Abbildungen mit einer hohen Farbtiefe denkbar, ähnlich der Farbbilderzeugung durch Grundfarbeinzelpunkte beim Farbbildruck oder beim Farbmonitor.

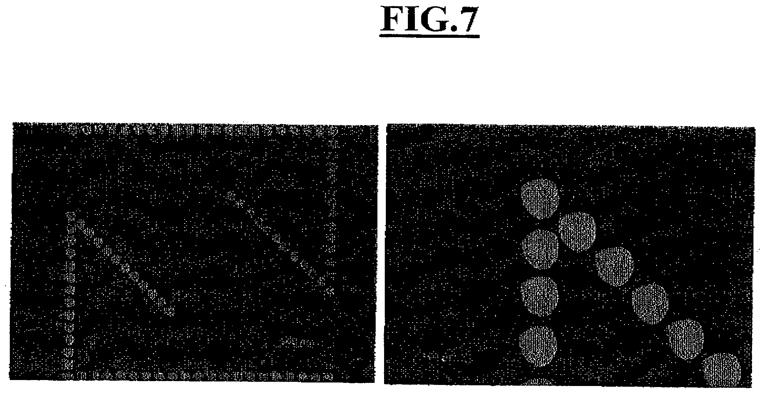

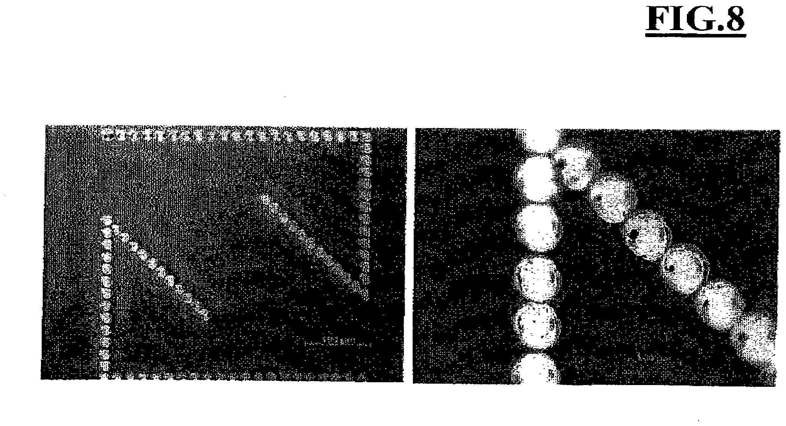

Experimente zeigen, dass sich durch die beschriebene Laserbehandlung mit einem Excimer-Laser auf einer entsprechend beschichteten Brillenlinse Farbflächen und Farbpixel in drei deutlich unterschiedlichen Farben erzeugen lassen, die den Grundfarben Gelb, Cyan (am Übergang von Blau zu Grün liegenden Farbton) und Magenta ähneln. Die Figuren 7 und 8 zeigen jeweils eine Lasergravur in Form eines "Z-Zeichen" auf gleich beschichteten

Substraten (CR39). Die unbehandelte Oberfläche hat einen blau-grünen Farbreflex, die schwach laserbehandelten Stellen (Laserdots) zeigen eine rötliche Farbe, die stark laserbehandelten Stellen eine gelbe Farbe. Aufgrund unterschiedlicher Kontrasteinstellungen unter den einzelnen Mikroskopaufnahmebedingungen wird die blaue Farbe der Oberfläche in den Bildern nicht gleich wiedergegeben. Zu erkennen ist der unterschiedliche Durchmesser der schwach und stark laserbehandelten Laserdots. Tiefenprofilmessungen mit einen Laserscanning-Mikroskop (LSM) ergeben für die schwach laserbehandelten Stellen Tiefen in der Größenordnung der Dicke des Schichtstapels, wobei die stark laserbehandelten Stellen etwa drei mal so tief sind wie die schwach laserbehandelten Stellen, was etwa der oben im Zusammenhang mit der Figur 6 beschriebenen physikalischen Modellvorstellung für die behandelte Schicht entspricht.

Der Durchmesser der Laserdots von etwa 100 µm ermöglicht eine Auflösung von ca. 250 dpi (Dots per inch).

Eine bei der Anmelderin bereits vorhandene Vorrichtung basierend auf Lasergravurtechnik erlaubt, über softwaregesteuerte Positionierung des Laserstrahls, die punktuelle Gravur über die gesamte Abmessung einer Brillenlinse. Damit lassen sich nicht nur Kennzeichnungen an beliebige Stellen des Glases aufbringen sondern, bei entsprechender Softwaregestaltung, auch Rastergrafiken auf der Glasoberfläche generieren, ähnlich einer schwarzweiß Rastergrafik von Tageszeitungen. Die Kennzeichnung oder die Rastergrafik kann farbig erscheinen, entsprechend der Reflex- und Interferenzbedingungen an der laserbehandelten Stelle. Die Farbe ist dabei entweder monochromatisch oder willkürlich chromatisch.

Die gezielte Erzeugung von definiert mehrfarbigen Abbildungen, insbesondere definiert mehrfarbigen Rastergrafiken, auf Brillengläsern ist für ästhetische Zwecke vorteilhaft, z. B. für Abbildungen auf verspiegelten Sonnenbrillengläsern.

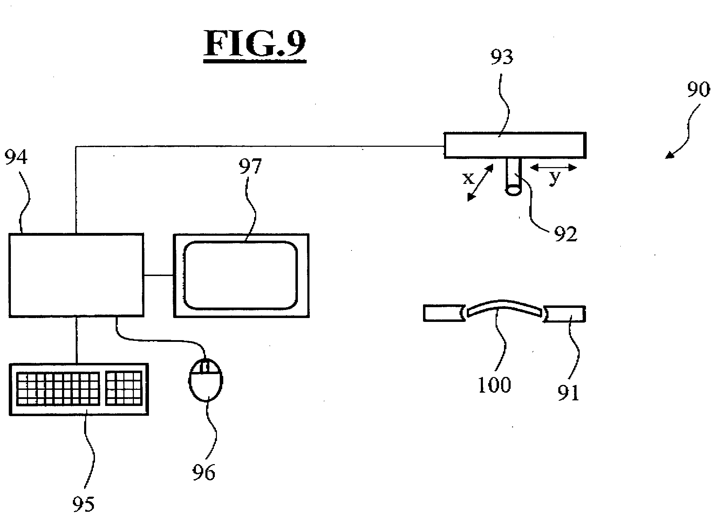

Figur 9 zeigt schematisch die erfindungsgemäße Vorrichtung 90 zur Herstellung einer Brillenlinse 1000 für einen Brillenträger. Die Vorrichtung 90 umfasst einen Träger 91 zum Bereitstellen einer Brillenlinse 1000 der oben beschriebenen Art, nämlich mit einem eine lichtbrechende Wirkung aufweisenden Linsenkörper mit einer Oberfläche und mit einem auf der Oberfläche angeordneten Interferenzschichtsystem. Das Interferenzschichtsystem besteht aus einem eine Stapeldicke aufweisenden Schichtstapel mit wenigstens zwei optisch transparenten Materialien, wobei benachbarte Schichten unterschiedliche Brechungsindices aufweisen (nicht gezeichnet).

Die Vorrichtung weist eine Abtrageeinrichtung zum Abtragen des Interferenzschichtsystems auf. Diese Abtrageeinrichtung ist in Form eines Laserkopfes 92 ausgeführt, der in drei Richtungen x, y und z über eine entsprechende Mechanik 93 bewegbar ist.

Ein Computer 94 kann mittels einer entsprechenden Software die Mechanik 93 des Laserkopfs 92 ansteuern und damit über die von dem Träger 91 gehaltene Brillenlinse 1000 in x- und y-Richtung und (soweit notwendig) in z-Richtung verfahren. Der Computer 94 verfügt über Eingabegeräte 95, 96 sowie eine Anzeigeeinrichtung 97, um einem Benutzer die Eingabe von den Verfahrweg bestimmenden Parametern zu erlauben. Die Software ist auch eingerichtet, den Laser anzusteuern, insbesondere dessen Pulsleistung, Pulsdauer etc.

Der Computer ist vermittels der Software derart programmiert, dass der Laser derart ausgerichtet wird und dessen Lichtenergie so auf die Interferenzschicht einwirkt, dass ein Abtrag erfolgt derart, dass in dem ersten Oberflächenbereich ein eine erste Stapeldicke aufweisender erster Schichtstapel verbleibt und dass in dem zweiten Oberflächenbereich ein eine zweite Stapeldicke aufweisender zweiter Schichtstapel verbleibt, wobei die zweite Stapeldicke und die erste Stapeldicke verschieden sind und zwar um wenigstens 20 nm.

## Patentansprüche

1. Verfahren zur Herstellung einer Brillenlinse (1000, 2000, 3000, 4000, 5000, 6000) für einen Brillenträger umfassend
- einen eine lichtbrechende Wirkung aufweisenden Linsenkörper (100, 6100) mit einer Oberfläche (101, 6101)
- ein auf der Oberfläche (101, 6101) angeordnetes Interferenzschichtsystem, wobei
- das Interferenzschichtsystem in wenigstens einem ersten Oberflächenbereich (6) ausschließlich aus einem eine erste Stapeldicke (D₁₀) aufweisenden ersten Schichtstapel (10) besteht, wobei der erste Schichtstapel (10) wenigstens eine, eine erste Schichtdicke (d₁) aufweisende erste Dünnschicht (1) aus einem optisch transparenten, einen ersten Brechungsindex (n₁) aufweisenden ersten Material umfasst, wobei
- das Interferenzschichtsystem in wenigstens einem von dem ersten Oberflächenbereich (6) verschiedenen zweiten Oberflächenbereich (5) ausschließlich aus einem, eine von der ersten Stapeldicke (D₁₀) verschiedene zweite Stapeldicke (D₂₀) aufweisenden zweiten Schichtstapel (20) besteht, der den wenigstens einen ersten Schichtstapel (10) umfasst, wobei nämlich der erste Schichtstapel (10) Bestandteil des zweiten Schichtstapels (20) ist und die zweite Stapeldicke (D₂₀) größer als die erste Stapeldicke (D₁₀) ist, wobei
- das Interferenzschichtsystem in wenigstens einem von dem ersten Oberflächenbereich (6) und von dem zweiten Oberflächenbereich (5) verschiedenen dritten Oberflächenbereich (4, 4a, 4b) aus ausschließlich einem, eine von der ersten Stapeldicke (D₁₀) und von der zweiten Stapeldicke (D₂₀) verschiedene dritte Stapeldicke (D₃₀) aufweisenden dritten Schichtstapel (30) besteht, der den wenigstens einen zweiten Schichtstapel (20) umfasst, wobei
der dritte Schichtstapel zusätzlich wenigstens eine, eine zweite Schichtdicke (d₃) aufweisende zweite Dünnschicht (3) aus einem optisch transparenten zweiten Material umfasst, das Material der zweiten Dünnschicht (3) von dem vertikal angrenzenden optisch transparenten Material des zweiten Schichtstapels (20) verschieden ist und dass das Material der zweiten Dünnschicht (3), einen von dem Brechungsindex (n₂) des vertikal angrenzenden optisch transparenten Materials des zweiten Schichtstapels (20) verschiedenen zweiten Brechungsindex (n₃) aufweist, mit folgenden Verfahrensschritten:
- Bereitstellen eines eine lichtbrechende Wirkung aufweisenden Linsenkörpers (100, 6100) mit einer Oberfläche (101, 6101) und mit einem auf der Oberfläche (101, 6101) angeordneten Interferenzschichtsystem, wobei das Interferenzschichtsystem ausschließlich aus dem die dritte Stapeldicke (D₃₀) aufweisenden dritten Schichtstapel (30) besteht, wobei der dritte Schichtstapel (30) wenigstens die erste Dünnschicht (1) aus einem optisch transparenten, einen ersten Brechungsindex (n₁) aufweisenden ersten Material und die zweite Dünnschicht (3) aus einem optisch transparenten, einen zweiten Brechungsindex (n₃) aufweisenden zweiten Material aufweist, wobei das erste Material von dem Material der vertikal angrenzenden Dünnschicht (2) des dritten Schichtstapels (30) verschieden ist, wobei der erste Brechungsindex (n₁) von dem Brechungsindex (n₂) der vertikal angrenzenden Dünnschicht des dritten Schichtstapels (30) verschieden ist, wobei das zweite Material von dem Material der vertikal angrenzenden Dünnschicht des dritten Schichtstapels (30) verschieden ist, wobei der zweite Brechungsindex (n₃) von dem Brechungsindex (n₂) der vertikal angrenzenden Dünnschicht (2) des dritten Schichtstapels (30) verschieden ist,
- Abtragen des Interferenzschichtsystems in wenigstens dem ersten Oberflächenbereich (6), so dass in dem ersten Oberflächenbereich (6) der die erste Stapeldicke (D₁₀) aufweisende erste Schichtstapel (10) verbleibt, **gekennzeichnet durch**
- Abtragen des Interferenzschichtsystems in wenigstens dem zweiten Oberflächenbereich (5), so dass in dem zweiten Oberflächenbereich (5) ein eine zweite Stapeldicke (D₂₀) aufweisender zweiter Schichtstapel (20) verbleibt, wobei die zweite Stapeldicke (D₂₀) von der ersten Stapeldicke (D₁₀) verschieden ist.

2. Verfahren nach Anspruch 1, **gekennzeichnet durch** den weiteren Verfahrensschritt:
- Abtragen des Interferenzschichtsystems in wenigstens einem vierten Oberflächenbereich, so dass in dem vierten Oberflächenbereich (4, 4a, 4b) ein eine vierte Stapeldicke (D₄₀) aufweisender vierter Schichtstapel (40) verbleibt, wobei die vierte Stapeldicke (D₄₀) von der ersten Stapeldicke (D₁₀) und der zweiten Stapeldicke (D₂₀) paarweise verschieden ist.

3. Verfahren nach einem der Ansprüche 1 oder 2, **dadurch gekennzeichnet, dass** das Abtragen bis zu einer Grenzfläche zwischen zwei Dünnschichten erfolgt.

4. Verfahren nach einem der Ansprüche 1 bis 3, **dadurch gekennzeichnet, dass** das Abtragen des Interferenzsystems mit Hilfe eines Laserstrahls oder mit Hilfe eines Elektronenstrahls erfolgt.

5. Verfahren nach einem der Ansprüche 1 bis 4, **dadurch gekennzeichnet, dass** der Laserstrahl oder der Elektronenstrahl derart rasterartig über die Brillenlinse (1000, 2000, 3000, 4000, 5000, 6000) geführt wird, dass eine Mehrzahl rasterartig angeordnete, pixelförmige erste Oberflächenbereiche (6) mit dem ersten Schichtstapel erzeugt werden und/oder dass eine Mehrzahl rasterartig angeordnete, pixelförmige zweite Oberflächenbereiche (5) mit dem zweiten Schichtstapel (20) erzeugt werden und/oder dass eine Mehrzahl rasterartig angeordnete, pixelförmige dritte Oberflächenbereiche (4, 4a, 4b) mit dem dritten Schichtstapel (30) erzeugt werden und/oder dass eine Mehrzahl rasterartig angeordnete, pixelförmige vierte Oberflächenbereiche (4, 4a, 4b) mit dem vierten Schichtstapel (40) erzeugt werden.

6. Verfahren nach einem der Ansprüche 1 bis 5, **dadurch gekennzeichnet, dass**
- der erste Schichtstapel (10) so gewählt ist, dass eine Beleuchtung mit weißem Licht in dem wenigstens einen ersten Oberflächenbereich (6) mit einer ersten Reflexfarbe erscheint, dass der zweite Schichtstapel (20) so gewählt ist, dass eine Beleuchtung mit weißem Licht in dem wenigstens einen zweiten Oberflächenbereich (5) mit einer von der ersten Reflexfarbe verschiedenen zweiten Reflexfarbe erscheint und dass eine Beleuchtung mit weißem Licht in dem wenigstens einen dritten Oberflächenbereich (4, 4a, 4b) mit einer von der ersten Reflexfarbe und mit einer von der zweiten Reflexfarbe verschiedenen dritten Reflexfarbe erscheint
oder dass
- der erste Schichtstapel (10) so gewählt ist, dass eine Beleuchtung mit weißem Licht in dem wenigstens einen ersten Oberflächenbereich (6) mit einer ersten Reflexfarbe erscheint, dass der zweite Schichtstapel (20) so gewählt ist, dass eine Beleuchtung mit weißem Licht in dem wenigstens einen zweiten Oberflächenbereich (5) mit einer von der ersten Reflexfarbe verschiedenen zweiten Reflexfarbe erscheint und dass eine Beleuchtung mit weißem Licht in dem wenigstens einen vierten Oberflächenbereich (7) mit einer von der ersten Reflexfarbe und mit einer von der zweiten Reflexfarbe verschiedenen vierten Reflexfarbe erscheint.

7. Verfahren nach einem der Ansprüche 5 bis 6, **dadurch gekennzeichnet, dass**
- die rasterartig angeordneten, pixelförmigen ersten Oberflächenbereiche (6) in einer ersten Oberflächenregion der Brillenlinse (1000, 2000, 3000, 4000, 5000, 6000) ein erstes Rastermaß aufweisen und dass die rasterartig angeordneten, pixelförmigen ersten Oberflächenbereiche (6) in einer zweiten Oberflächenregion der Brillenlinse (1000, 2000, 3000, 4000, 5000, 6000) ein zweites von dem ersten Rastermaß verschiedenes Rastermaß aufweisen
oder dass
- die rasterartig angeordneten, pixelförmigen zweiten Oberflächenbereiche (5) in einer dritten Oberflächenregion der Brillenlinse (1000, 2000, 3000, 4000, 5000, 6000) ein drittes Rastermaß aufweisen und dass die rasterartig angeordneten, pixelförmigen zweiten Oberflächenbereiche (5) in einer vierten Oberflächenregion der Brillenlinse (1000, 2000, 3000, 4000, 5000, 6000) ein viertes von dem dritten Rastermaß verschiedenes Rastermaß aufweisen
oder dass
- die rasterartig angeordneten, pixelförmigen dritten Oberflächenbereiche (4, 4a, 4b) in einer fünften Oberflächenregion der Brillenlinse (1000, 2000, 3000, 4000, 5000, 6000) ein fünftes Rastermaß aufweisen und dass die rasterartig angeordneten, pixelförmigen dritten Oberflächenbereiche (4, 4a, 4b) in einer sechsten Oberflächenregion der Brillenlinse (1000, 2000, 3000, 4000, 5000, 6000) ein sechstes von dem fünften Rastermaß verschiedenes Rastermaß aufweisen
oder dass
- die rasterartig angeordneten, pixelförmigen vierten Oberflächenbereiche in einer siebenten Oberflächenregion der Brillenlinse (1000, 2000, 3000, 4000, 5000, 6000) ein siebentes Rastermaß aufweisen und dass die rasterartig angeordneten, pixelförmigen vierten Oberflächenbereiche (7) in einer achten Oberflächenregion der Brillenlinse (1000, 2000, 3000, 4000, 5000, 6000) ein achtes von dem siebenten Rastermaß verschiedenes Rastermaß aufweisen.

8. Computerprogramm mit Programmcode zur Durchführung des Verfahrens nach einem der Ansprüche 1 bis 7, beinhaltend eine Steuerung eines Abtragsorts von Laser- oder Elektronenstrahlen und/oder eine Einstellung deren Energiedichte und Verweildauer am Abtragsort auf der Brillenlinse, wenn das Programm auf einem Computer in einer Vorrichtung zur Durchführung des Verfahrens ausgeführt wird

## Claims

1. Method for manufacturing a spectacle lens (1000, 2000, 3000, 4000, 5000, 6000) for a spectacle lens comprising
- a lens body (100, 6100) having a light-refracting effect, with a surface (101, 6101)
- an interference layer system arranged on the surface (101, 6101), wherein
- the interference layer system consists in at least one surface region (6) exclusively of a first layer stack (10) having a first stack thickness (D₁₀), the first layer stack (10) comprising at least a first thin layer (1) which has a first layer thickness (d₁) and consists of an optically transparent first material having a first refractive index (m), wherein
- the interference layer system consists in at least one second surface region (5), different from the first surface region (6), of a second layer stack (20) having a second stack thickness (D₂₀) different from the first stack thickness (D₁₀), which comprises the at least one first layer stack (10), the first layer stack (10) specifically being a component of the second layer stack (20) and the second stack thickness (D₂₀) being greater than the first stack thickness (D₁₀), wherein
- the interference layer system consists in at least one third surface region (4, 4a, 4b), different from the first surface region (6) and the second surface region (5), exclusively of a third layer stack (30) having a third stack thickness (D₃₀) different from the second stack thickness (D₂₀) and the first stack thickness (D₁₀), which comprises the at least one second layer stack (20), wherein
the third layer stack additionally comprises at least a second thin layer (3), which has a second layer thickness (d₃) and consists of an optically transparent second material, the material of the second thin layer (3) is different from the vertically adjacent optically transparent material of the second layer stack (20) and that the material of the second thin layer (3) has second refractive index (n₃) different from the refractive index (n₂) of the vertically adjacent optically transparent material of the second layer stack (20), having the following method steps:
- providing a lens body (100, 6100) having a light-refracting effect, with a surface (101, 6101) and with an interference layer system arranged on the surface (101, 6101), the interference layer system consisting exclusively of the third layer stack (30) having the third stack thickness (D₃₀), the third layer stack (30) having at least the first thin layer (1) of an optically transparent first material having a first refractive index (m) and the second thin layer (3) of an optically transparent second material having a second first refractive index (n₃), the first material being different from the material of the vertically adjacent thin layer (2) of the third layer stack (30), the first refractive index (m) being different from the refractive index (n₂) of the vertically adjacent thin layer of the third layer stack (30), the second material being different from the vertically adjacent thin layer of the third layer stack (30), the second refractive index (n₃) being different from the refractive index (n₂) of the vertically adjacent thin layer (2) of the third layer stack (30),
- removing the interference layer system in at least the first surface region (6) in such a way that the first layer stack (10) having the first stack thickness (D₁₀) remains in the first surface region (6),
**characterized by**
- removal of the interference layer system in at least the second surface region (5) in such a way that a second layer stack (20) having a second stack thickness (D₂₀) remains in the second surface region (5), the second stack thickness (D₂₀) being different from the first stack thickness (D₁₀).

2. Method according to Claim 1, **characterized by** the further method step:
- removing the interference layer system in at least one fourth surface region in such a way that the fourth layer stack (40) having the fourth stack thickness (D₄₀) remains in the fourth surface region (4, 4a, 4b), the fourth stack thickness (D₄₀) being pairwise different from the first stack thickness (D₁₀) and the second stack thickness (D₂₀).

3. Method according to one of Claims 1 and 2, **characterized in that** the removal takes place as far as an interface between two thin layers.

4. Method according to one of Claims 1 to 3, **characterized in that** the removal of the laser system takes place with the aid of a laser beam or with the aid of an electron beam.

5. Method according to one of Claims 1 to 4, **characterized in that** the laser beam or the electron beam is guided in a raster over the spectacle lens (1000, 2000, 3000, 4000, 5000, 6000) in such a way that a plurality of pixel-like first surface regions (6) arranged in a raster are generated with the first layer stack, and/or that a plurality of pixel-like second surface regions (5) arranged in a raster are generated with the second layer stack (20), and/or that a plurality of pixel-like third surface regions (4, 4a, 4b) arranged in a raster are generated with the third layer stack (30), and/or that a plurality of pixel-like fourth surface regions (4, 4a, 4b) arranged in a raster are generated with the fourth layer stack (40).

6. Method according to one of Claims 1 to 5, **characterized in that**
- the first layer stack (10) is selected in such a way that illumination with white light appears in the at least one first surface region (6) with a first reflection colour, that the second layer stack (20) is selected in such a way that illumination with white light appears in the at least one second surface region (5) with a second reflection colour different from the first reflection colour, and that illumination with white light appears in the at least one third surface region (4, 4a, 4b) with a third reflection colour different from the first reflection colour and with a from the second reflection colour,
or **in that**
- the first layer stack (10) is selected in such a way that illumination with white light appears in the at least one first surface region (6) with a first reflection colour, that the second layer stack (20) is selected in such a way that illumination with white light appears in the at least one second surface region (5) with a second reflection colour different from the first reflection colour, and that illumination with white light appears in the at least one fourth surface region (4, 4a, 4b) with a fourth reflection colour different from the first reflection colour and with a from the second reflection colour.

7. Method according to one of Claims 5 to 6, **characterized in that**
- the pixel-like first surface regions (6) arranged in a raster have a first raster dimension in a first surface region of the spectacle lens (1000, 2000, 3000, 4000, 5000, 6000) and **in that** the pixel-like first surface regions (6) arranged in a raster have a second raster dimension, different from the first raster dimension, in a second surface region of the spectacle lens (1000, 2000, 3000, 4000, 5000, 6000)
or **in that**
- the pixel-like second surface regions (5) arranged in a raster have a third raster dimension in a third surface region of the spectacle lens (1000, 2000, 3000, 4000, 5000, 6000) and **in that** the pixel-like second surface regions (5) arranged in a raster have a fourth raster dimension, different from the third raster dimension, in a fourth surface region of the spectacle lens (1000, 2000, 3000, 4000, 5000, 6000) or **in that**
- the pixel-like third surface regions (4, 4a, 4b) arranged in a raster have a fifth raster dimension in a fifth surface region of the spectacle lens (1000, 2000, 3000, 4000, 5000, 6000) and **in that** the pixel-like third surface regions (4, 4a, 4b) arranged in a raster have a sixth raster dimension, different from the fifth raster dimension, in a sixth surface region of the spectacle lens (1000, 2000, 3000, 4000, 5000, 6000) or **in that**
- the pixel-like fourth surface regions arranged in a raster have a seventh raster dimension in a seventh surface region of the spectacle lens (1000, 2000, 3000, 4000, 5000, 6000) and **in that** the pixel-like fourth surface regions arranged in a raster have an eighth raster dimension, different from the seventh raster dimension, in an eighth surface region of the spectacle lens (1000, 2000, 3000, 4000, 5000, 6000).

8. A computer program having program code for carrying out the method according to one of claims 1 to 7, containing a control of the removal location of laser or electron beams and/or an adjustment of their energy density and dwell time at the removal location on the spectacle lens, when the program is run on a computer in an apparatus for carrying out the method.

## Revendications

1. Procédé de fabrication d'un verre de lunettes (1000, 2000, 3000, 4000, 5000, 6000) destiné à un porteur de lunettes, ledit verre de lunettes comprenant
- un corps de verre (100, 6100) qui a un effet réfringent et qui comporte une surface (101, 6101),
- un système de couches interférentiel disposé sur la surface (101, 6101),
- le système de couches interférentiel comprenant dans au moins une première zone de surface (6) exclusivement un premier empilement de couches (10) d'une première épaisseur d'empilement (D₁₀), le premier empilement de couches (10) comprenant au moins une première couche mince (1) d'une première épaisseur de couche (d₁) qui comprend une première matière optiquement transparente présentant un premier indice de réfraction (n₁),
- le système de couches interférentiel comprenant dans au moins une deuxième zone de surface (5), différente de la première zone de surface (6), exclusivement un deuxième empilement de couches (20) d'une deuxième épaisseur d'empilement (D₂₀), différente de la première épaisseur d'empilement (D₁₀), qui comprend au moins un premier empilement de couches (10), le premier empilement de couches (10) faisant partie du deuxième empilement de couches (20) et la deuxième épaisseur d'empilement (D₂₀) étant supérieure à la première épaisseur d'empilement (D₁₀),
- le système de couches interférentiel comprenant dans au moins une troisième zone de surface (4, 4a, 4b), différente de la première zone de surface (6) et de la deuxième zone de surface (5), exclusivement un troisième empilement de couches (30) d'une troisième épaisseur d'empilement (D₃₀), différente de la première épaisseur d'empilement (D₁₀) et de la deuxième épaisseur d'empilement (D₂₀), qui comprend l'au moins un deuxième empilement de couches (20),
le troisième empilement de couches comprenant en outre au moins une deuxième couche mince (3) d'une deuxième épaisseur de couche (d₃) comprenant une deuxième matière optiquement transparente, la matière de la deuxième couche mince (3) étant différente de la matière optiquement transparente verticalement adjacente du deuxième empilement de couches (20) et la matière de la deuxième couche mince (3) ayant un deuxième indice de réfraction (n₃) différent de l'indice de réfraction (n₂) de la matière optiquement transparente verticalement adjacente du deuxième empilement de couches (20), ledit procédé comprenant les étapes suivantes :
- fournir un corps de verre (100, 6100) ayant un effet réfractif et comportant une surface (101, 6101) et un système de couches interférentiel disposé sur la surface (101, 6101), le système de couches interférentiel comprenant exclusivement un troisième empilement de couches (30) de la troisième épaisseur d'empilement (D₃₀), le troisième empilement de couches (30) comprenant au moins la première couche mince (1) comprenant une première matière optiquement transparente ayant un premier indice de réfraction (n₁) et la deuxième couche mince (3) comprenant une deuxième matière optiquement transparente ayant un deuxième indice de réfraction (n₃), la première matière étant différente de la matière de la couche mince (2) verticalement adjacente du troisième empilement de couches (30), le premier indice de réfraction (n₁) étant différent de l'indice de réfraction (n₂) de la couche mince verticalement adjacente du troisième empilement de couches (30), la deuxième matière étant différente de la matière de la couche mince verticalement adjacente du troisième empilement de couches (30), le deuxième indice de réfraction (n₃) étant différent de l'indice de réfraction (n₂) de la couche mince (2) verticalement adjacente du troisième empilement de couches (30),
- enlever le système de couches interférentiel dans au moins la première zone de surface (6) de sorte que le premier empilement de couches (10) de la plus grande épaisseur d'empilement (D₁₀) reste dans la première zone de surface (6),
**caractérisé par** l'étape suivante
- enlever le système de couches interférentiel dans au moins la deuxième zone de surface (5) de sorte qu'un deuxième empilement de couches (20) d'une deuxième épaisseur d'empilement (D₂₀) reste dans la deuxième zone de surface (5), la deuxième épaisseur d'empilement (D₂₀) étant différente de la première épaisseur d'empilement (D₁₀).

2. Procédé selon la revendication 1, **caractérisé par** l'étape de procédé supplémentaire suivante :
- enlever le système de couches interférentiel dans au moins une quatrième zone de surface de sorte qu'un quatrième empilement de couches (40) d'une quatrième épaisseur d'empilement (D₄₀) reste dans la quatrième zone de surface (4, 4a, 4b), la quatrième épaisseur d'empilement (D₄₀) étant différente par paires de la première épaisseur d'empilement (D₁₀) et de la deuxième épaisseur d'empilement (D₂₀).

3. Procédé selon l'une des revendications 1 ou 2, **caractérisé en ce que** l'enlèvement est effectué jusqu'à une interface entre deux couches minces.

4. Procédé selon l'une des revendications 1 à 3, **caractérisé en ce que** l'enlèvement du système interférentiel est effectué à l'aide d'un faisceau laser ou à l'aide d'un faisceau d'électrons.

5. Procédé selon l'une des revendications 1 à 4, **caractérisé en ce que** le faisceau laser ou le faisceau électronique est guidé sur le verre de lunettes (1000, 2000, 3000, 4000, 5000, 6000) de manière tramée de façon à générer une pluralité de premières zones de surface (6) en forme de pixels disposées de manière tramée et pourvues du premier empilement de couches et/ou une pluralité de deuxièmes zones de surface (5) en forme de pixels disposées de manière tramée et pourvues du deuxième empilement de couches (20) et/ou une pluralité de troisièmes zones de surface (4, 4a, 4b) en forme de pixels disposées de manière tramée et pourvues du troisième empilement de couches (30) et/ou une pluralité de quatrièmes zones de surface (4, 4a, 4b) en forme de pixels disposées de manière tramée et pourvues du quatrième empilement de couches (40).

6. Procédé selon l'une des revendications 1 à 5, **caractérisé en ce que**
- le premier empilement de couches (10) est sélectionné de telle sorte qu'un éclairage avec une lumière blanche dans l'au moins une première zone de surface (6) apparaisse avec une première couleur de reflet, le deuxième empilement de couches (20) est sélectionné de telle sorte qu'un éclairage avec une lumière blanche dans l'au moins une deuxième zone de surface (5) apparaisse avec une deuxième couleur de reflet différente de la première couleur de reflet et un éclairage avec une lumière blanche dans l'au moins une troisième zone de surface (4, 4a, 4b) apparaisse avec une troisième couleur de reflet différente de la première couleur de reflet et de la deuxième couleur de reflet,
ou **en ce que**
- le premier empilement de couches (10) est sélectionné de telle sorte qu'un éclairage avec une lumière blanche dans l'au moins une première zone de surface (6) apparaisse avec une première couleur de reflet, et le deuxième empilement de couches (20) est sélectionné de telle sorte qu'un éclairage avec une lumière blanche dans l'au moins une deuxième zone de surface (5) apparaisse avec une deuxième couleur de reflet différente de la première couleur de reflet et un éclairage avec une lumière blanche dans l'au moins une quatrième zone de surface (7) apparaisse avec une quatrième couleur de reflet différente de la première couleur de reflet et de la deuxième couleur de reflet.

7. Procédé selon l'une des revendications 5 à 6, **caractérisé en ce que**
- les premières zones de surface (6) en forme de pixels disposées de manière tramée présentent dans une première zone de surface du verre de lunettes (1000, 2000, 3000, 4000, 5000, 6000) un premier tramage et les premières zones de surface (6) en forme de pixels disposées de manière tramée présentent dans une deuxième zone de surface du verre de lunettes (1000, 2000, 3000, 4000, 5000, 6000) un deuxième tramage qui est différent du premier tramage,
ou **en ce que**
- les deuxièmes zones de surface (5) en forme de pixels disposées de manière tramée présentent dans une troisième zone de surface du verre de lunettes (1000, 2000, 3000, 4000, 5000, 6000) un troisième tramage et les deuxièmes zones de surface (5) en forme de pixels disposées de manière tramée présentent dans une quatrième zone de surface du verre de lunettes (1000, 2000, 3000, 4000, 5000, 6000) un quatrième tramage qui est différent du troisième tramage,
ou **en ce que**
- les troisièmes zones de surface (4, 4a, 4b) en forme de pixels disposées de manière tramée présentent dans une cinquième zone de surface du verre de lunettes (1000, 2000, 3000, 4000, 5000, 6000) un cinquième tramage et les troisièmes zones de surface (4, 4a, 4b) en forme de pixels disposées de manière tramée présentent dans une sixième zone de surface du verre de lunettes (1000, 2000, 3000, 4000, 5000, 6000) un sixième tramage qui est différent du cinquième tramage, ou **en ce que**
- les quatrièmes zones de surface en forme de pixels disposées de manière tramée présentent dans une septième zone de surface du verre de lunettes (1000, 2000, 3000, 4000, 5000, 6000) un septième tramage et les quatrièmes zones de surface (7) en forme de pixels disposées de manière tramée présentent dans une huitième zone de surface du verre de lunettes (1000, 2000, 3000, 4000, 5000, 6000) un huitième tramage qui est différent du septième tramage.

8. Programme informatique comprenant un code de programme destiné à mettre en œuvre le procédé selon l'une des revendications 1 à 7, incluant une commande d'un site d'enlèvement par faisceaux laser ou faisceaux d'électrons et/ou un réglage de la densité d'énergie de ceux-ci et de la durée de séjour de ceux-ci sur le site d'enlèvement sur le verre de lunettes, lorsque le programme est exécuté sur un ordinateur d'un dispositif de mise en œuvre du procédé.
